# EUROPEAN PATENT APPLICATION

(11) **EP 4 598 176 A1**
(43) Date of publication of application: **06.08.2025**
(21) Application number: 22960163.8
(22) Date of filing: 29.09.2022
(51) Int. Cl.: H04W 72/04

(54) **INFORMATION RECEIVING METHOD, INFORMATION SENDING METHOD, AND APPARATUS**

(71) Applicant: FUJITSU LIMITED, Kawasaki-shi, Kanagawa 211-8588 (JP)
(72) Inventor: ZHANG, Jian, Beijing 100022 (CN); JIA, Meiyi, Beijing 100022 (CN); SUN, Gang, Beijing 100022 (CN); WANG, Xin, Beijing 100022 (CN)
(74) Representative: Haseltine Lake Kempner LLP
(86) International application number: PCT/CN2022/122913
(87) International publication number: WO 2024/065528

(57) **Abstract**

Embodiments of the present disclosure provide a method and an apparatus for information reception and information transmission. The method includes: a terminal equipment receives first indication information, wherein the first indication information is used to indicate a first TCI state and cell switch; and transmits feedback information (HARQ-ACK); after at least a first time interval is passed after a last symbol of the feedback information (HARQ-ACK), indicated first TCI state is applied in a switched cell. Thereby, a situation in which the terminal equipment and a network device have ambiguity about when the TCI state may start to be applied in switched cells can be avoided, thereby achieving fast beam switching and cell switch.

## Description

### TECHNICAL FIELD

Embodiments of the present disclosure relate to the technical field of communication.

### BACKGROUND

In the standardization process of release 17 (Rel-17), the 3GPP Standardization Organization carried out standardization-related work on inter-cell beam management (ICBM). A terminal equipment in Rel-17 may use a beam of a non-serving cell, but is not switched to the non-serving cell.

In the standardization process of release 17 (Rel-17), the 3GPP Standardization Organization carried out standardization related work for unified transmission configuration indications (TCIs). The unified TCI in Rel-17 is designed mainly for a single transmission and reception point (sTRP) scenario. Inter-cell beam management in Rel-17 is based on a unified TCI framework.

It should be noted that the above introduction to the technical background is just to facilitate a clear and complete description of the technical solutions of the present disclosure, and is elaborated to facilitate the understanding of persons skilled in the art, it cannot be considered that these technical solutions are known by persons skilled in the art just because these solutions are elaborated in the Background of the present disclosure.

### SUMMARY

In Rel-17, standardization was carried out on inter-cell beam management (ICBM). The ICBM includes measurement, reporting and beam indication. For measurement, a terminal equipment is capable of performing L1-RSRP measurement based on SSBs of a non-serving cell. For reporting, the terminal equipment reports an L1-RSRP measurement result to a network device. For beam indication, the network device may indicate a transmission configuration indication (TCI) state associated with the non-serving cell to the terminal equipment. In this way, the terminal equipment may use beams of the non-serving cell, for example, transmits information to the non-serving cell or receives information from the non-serving cell by using the beams. Although the terminal equipment can use the beams of the non-serving cell, a serving cell of the terminal equipment does not change, that is, the terminal equipment will not be switched to the non-serving cell by a switch process. Therefore, the terminal equipment is still in a bandwidth of the serving cell, and applies an indicated TCI state associated with the non-serving cell in the serving cell based on a relevant configuration of the serving cell. Here, the non-serving cell refers to a cell whose physical cell ID (PCI) is different from a physical cell ID of a serving cell.

In Rel-17, unified TCIs (transmission configuration indications) were standardized. Rel-17 ICBM is based on Rel-17 unified TCIs. Rel-17 unified TCIs are for a single transmission and reception point (sTRP) scenario. A transmission configuration indication (TCI) field of DCI format 1_1 or DCI format 1_2 indicates one or more TCI states. DCI format 1_1 or DCI format 1_2 may schedule downlink data, called DCI format 1_1/1_2 with DL assignment, or may not schedule downlink data, called DCI format 1_1/1_2 without DL assignment. Indicating or updating the TCI state actually also includes indicating or updating a beam used by the terminal equipment. The TCI state includes a joint TCI state, a downlink TCI state and an uplink TCI state. The joint TCI state acts simultaneously on a downlink beam (a receiving beam) and an uplink beam (a transmitting beam). In other words, the downlink beam and the uplink beam use the same beam, but beam directions are opposite, that is, there is reciprocity between the downlink beam and the uplink beam. Downlink TCI state only acts on the downlink beam. Uplink TCI state only acts on the uplink beam. Uplink beam is also called an uplink transmission spatial filter. For Rel-17's unified TCIs, a TCI field indicates a joint TCI state, or indicates a downlink TCI state, or indicates an uplink TCI state, or indicates a downlink TCI state and an uplink TCI state. Assuming that DCI indicates a TCI state, after beam application time, the TCI state starts to be applied. Channels or signals applied by the TCI state include dedicated channels or signals for terminal equipments, as well as some common channels or signals. Rel-17 defines a simultaneous TCI update list. In N cells of carrier aggregation, N1 (N1 ≤ M) cells belong to the same simultaneous TCI update list, N2 (N2 ≤ M) cells belong to another simultaneous TCI update list, and so on. If a TCI state applied by one cell is updated and the cell belongs to one simultaneous TCI update list, TCI states applied by other cells in the simultaneous TCI update list are also updated. In other words, TCI states of cells belonging to the one simultaneous TCI update list are updated simultaneously.

In Rel-18, layer 1/layer 2 (L1/L2) based mobility will be studied. For the topic i.e., layer 1/layer 2 (L1/L2) based mobility, its goal is to reduce time required for switch interruption, thereby switching from a serving cell to a non-serving cell faster. The switch interruption refers to time from that a terminal equipment receives a cell switch command to that the terminal equipment performs a first uplink or downlink communication with a switched cell. Compared with traditional layer 3 signaling based cell switch, layer 1/layer 2 signaling based cell switch can further reduce switch latency. In order to implement layer 1/layer 2 based cell switch, the terminal equipment needs to perform measurement and reporting for a non-serving cell, and the network device needs to indicate beams to be used after switch to the terminal equipment. For Rel-17 ICBM, the terminal equipment does not need to perform cell switch. For layer 1/layer 2 (L1/L2) based mobility in Rel-18, the terminal device needs to perform cell switch, switching to a non-serving cell (also called a target cell). Because of this major difference, measurement, reporting and beam indication in Rel-18 may possibly require a different design.

Currently, 3GPP has not begun to discuss a physical layer (RAN1) of the layer 1/layer 2 (L1/L2) based mobility.

The inventor finds: for the layer 1/layer 2 (L1/L2) based mobility in Rel-18, the terminal equipment needs to be switched to the target cell and uses beams (TCI states) of the target cell. At present, how to realize cell switch and beam switching is still an open problem.

For at least one of the above problems, the embodiments of the present disclosure provide a method and an apparatus for information reception and information transmission. The terminal equipment is configured with one or more candidate target cells, each candidate target cell is associated with one time interval. The terminal equipment is indicated to switch to a candidate target cell and apply a TCI state associated with the candidate target cell in the target cell after the time interval with which the candidate target cell is associated. Thereby, a situation in which the terminal equipment and a network device have ambiguity about when the TCI state may start to be applied in switched cells can be avoided, thereby achieving fast beam switching and cell switch.

According to one aspect of the embodiments of the present disclosure, an information reception method is provided, applicable to a terminal equipment, wherein the method includes:
receiving first indication information, wherein the first indication information indicates a first TCI state and cell switch;
transmitting feedback information (HARQ-ACK); and
after at least a first time interval is passed after a last symbol of the feedback information (HARQ-ACK), applying indicated first TCI state in a switched cell.

According to another aspect of the embodiments of the present disclosure, an information reception method is provided, applicable to a terminal equipment, wherein the method includes:
receiving third indication information, wherein the third indication information indicates a fourth TCI state;
after at least a fourth time interval is passed after a last symbol of the feedback information (HARQ-ACK) transmitted for the third indication information, applying the indicated fourth TCI state in a serving cell;
receiving fourth indication information, wherein the fourth indication information indicates cell switch; and
after at least a fifth time interval is passed after a reference symbol, applying the indicated fourth TCI state in a switched cell, wherein the reference symbol is a last symbol of the fourth indication information, or is a last symbol of the feedback information (HARQ-ACK) transmitted for the fourth indication information.

According to another aspect of the embodiments of the present disclosure, an information transmission method is provided, applicable to a network device, wherein the method includes:
transmitting first indication information, wherein the first indication information indicates a first TCI state and cell switch; and
receiving feedback information (HARQ-ACK);
wherein the indicated first TCI state is applied in a switched cell after at least a first time interval is passed after a last symbol of the feedback information (HARQ-ACK).

According to another aspect of the embodiments of the present disclosure, an information transmission method is provided, applicable to a network device, wherein the method includes:
transmitting third indication information, wherein the third indication information indicates a fourth TCI state;
receiving feedback information (HARQ-ACK) for the third indication information, wherein after at least a fourth time interval is passed after a last symbol of the feedback information (HARQ-ACK) for the third indication information, a terminal equipment applies the indicated fourth TCI state in a serving cell; and
transmitting fourth indication information, wherein the fourth indication information indicates cell switch;
wherein after at least a fifth time interval is passed after a reference symbol, the terminal equipment applies the indicated fourth TCI state in a switched cell, wherein the reference symbol is a last symbol of the fourth indication information, or is a last symbol of the feedback information (HARQ-ACK) for the fourth indication information.

According to another aspect of the embodiments of the present disclosure, an information reception apparatus is provided, configured in a terminal equipment, the information reception apparatus comprises:
a receiving unit configured to receive first indication information, wherein the first indication information indicates a first TCI state and cell switch; and
a transmitting unit configured to transmit feedback information (HARQ-ACK);
wherein after at least a first time interval is passed after a last symbol of the feedback information (HARQ-ACK), the indicated first TCI state is applied in a switched cell.

According to another aspect of the embodiments of the present disclosure, an information reception apparatus is provided, configured in a terminal equipment, the information reception apparatus comprises:
a second receiving unit configured to receive third indication information, wherein the third indication information indicates a fourth TCI state;
a second transmitting unit configured to transmit feedback information (HARQ-ACK) for the third indication information, wherein after at least a fourth time interval is passed after a last symbol of the feedback information (HARQ-ACK) transmitted for the third indication information, the indicated fourth TCI state is applied in a serving cell;
the second receiving unit is further configured to receive fourth indication information, wherein the fourth indication information indicates cell switch; and
after at least a fifth time interval is passed after a reference symbol, the indicated fourth TCI state is applied in a switched cell, wherein the reference symbol is a last symbol of the fourth indication information, or is a last symbol of the feedback information (HARQ-ACK) transmitted by the second transmitting unit for the fourth indication information.

According to a further aspect of the embodiments of the present disclosure, an information transmission apparatus is provided, configured in a network device, wherein the apparatus comprises:
a third transmitting unit configured to transmit first indication information, wherein the first indication information indicates a first TCI state and cell switch; and
a third receiving unit configured to receive the feedback information (HARQ-ACK); wherein the indicated first TCI state is applied in a switched cell after at least a first time interval is passed after a last symbol of the feedback information (HARQ-ACK).

According to a further aspect of the embodiments of the present disclosure, an information transmission apparatus is provided, applicable to a network device, wherein the apparatus comprises:
a fourth transmitting unit configured to transmit third indication information, wherein the third indication information indicates a fourth TCI state;
a fourth receiving unit configured to receive feedback information (HARQ-ACK) for the third indication information, wherein after at least a fourth time interval is passed after a last symbol of the feedback information (HARQ-ACK) for the third indication information, a terminal equipment applies the indicated fourth TCI state in a serving cell; and
the fourth transmitting unit is further configured to transmit fourth indication information, wherein the fourth indication information indicates cell switch;
wherein after at least a fifth time interval is passed after a reference symbol, the terminal equipment applies the indicated fourth TCI state in a switched cell, wherein the reference symbol is a last symbol of the fourth indication information, or is a last symbol of the feedback information (HARQ-ACK) for the fourth indication information.

One of advantageous effects of the embodiments of the present disclosure includes: a situation in which the terminal equipment and a network device have ambiguity about when the TCI state may start to be applied in switched cells can be avoided, thereby achieving fast beam switching and cell switch.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of a communication system in the embodiments of the present disclosure;
FIG. 2 is a schematic diagram of a signaling transmission and reception process in the embodiments of the present disclosure;
FIG. 3 is a schematic diagram of an information reception method in the embodiments of the present disclosure;
FIG. 4 is another schematic diagram of a signaling transmission and reception process in the embodiments of the present disclosure;
FIG. 5 is a schematic diagram of associating a TCI state with a cell in the embodiments of the present disclosure;
FIG. 6 is a schematic diagram of determining a first time interval in the embodiments of the present disclosure;
FIG. 7 is another schematic diagram of determining a first time interval in the embodiments of the present disclosure;
FIG. 8 is an example diagram of configuring a third time interval in the embodiments of the present disclosure;
FIG. 9 is another example diagram of configuring a third time interval in the embodiments of the present disclosure;
FIG. 10 is another schematic diagram of an information reception method in the embodiments of the present disclosure;
FIG. 11 is a further schematic diagram of a signaling transmission and reception process in the embodiments of the present disclosure;
FIG. 12 is another schematic diagram of an information reception method in the embodiments of the present disclosure;
FIG. 13 is a further schematic diagram of a signaling transmission and reception process in the embodiments of the present disclosure;
FIG. 14 is a schematic diagram of an information transmission method in the embodiments of the present disclosure;
FIG. 15 is another schematic diagram of an information transmission method in the embodiments of the present disclosure;
FIG. 16 is a further schematic diagram of an information transmission method in the embodiments of the present disclosure;
FIG. 17 is a schematic diagram of an information reception apparatus in embodiments of the present disclosure;
FIG. 18 is another schematic diagram of an information reception apparatus in embodiments of the present disclosure;
FIG. 19 is a schematic diagram of an information transmission apparatus in the embodiments of the present disclosure;
FIG. 20 is another schematic diagram of an information transmission apparatus in the embodiments of the present disclosure;
FIG. 21 is a composition schematic diagram of a network device in the embodiments of the present disclosure;
FIG. 22 is a schematic diagram of a terminal equipment in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to...... ", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.). And the term "base station" may include their some or all functions, each base station may provide communication coverage to a specific geographic region. The term "cell" may refer to a BS and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

Scenarios of the embodiments of the present disclosure are described through the following examples, however the present disclosure is not limited to these.

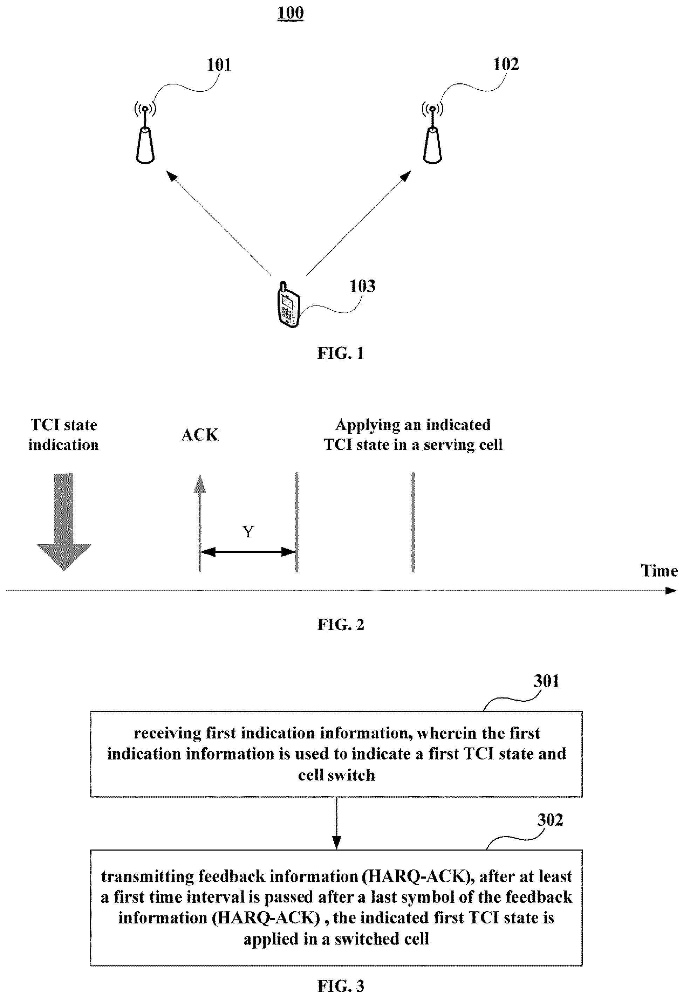

FIG. 1 is a schematic diagram of a communication system in the embodiments of the present disclosure, schematically describes situations by taking a terminal equipment and a network device as examples. As shown in FIG. 1, a communication system 100 may comprise a first network device 101, a second network device 102 and a terminal equipment 103. For simplicity, FIG. 1 only takes two network devices and one terminal equipment as examples for description, however the embodiments of the present disclosure are not limited to this.

For example, the first network device 101 is a serving cell of the terminal equipment 103, and the second network device 102 is a non-serving cell of the terminal equipment 103.

FIG. 2 is a schematic diagram of a signaling transmission and reception process in the embodiments of the present disclosure. Inter-cell beam management (ICBM) is schematically described by taking FIG. 2 as an example.

The terminal equipment receives DCI indicating a TCI state, wherein the TCI state is associated with one non-serving cell (such as the second network device 102 in FIG. 1). The terminal equipment feeds back ACK, and applies an indicated TCI state after at least one time interval Y (Y symbols of the serving cell, which may also be called beam application time (BAT)) after the last symbol of the ACK. For inter-cell beam management, the terminal equipment may be indicated to use one or more beams of a non-serving cell, but the terminal equipment does not perform cell switch, and uses the beams of the non-serving cell only in a serving cell (such as the first network device 101 in FIG. 1). A specific value of Y is configured by the network device, so that the terminal equipment has enough time to apply a newly indicated TCI state, that is, allow beam switching time.

Unlike the inter-cell beam management, for layer 1/layer 2 (L1/L2) based cell switch in Rel-18, the terminal equipment not only needs to use the beams of the non-serving cell, but also needs to switch to the non-serving cell. Considering that the non-serving cell may have a different center frequency and/or subcarrier spacing from the serving cell, in addition to the beam switching time, additional time is required for the terminal equipment to perform cell switch.

How to make the network device and the terminal equipment have no ambiguity in terms of the beam application time of a switched cell, that is, both parties have the same understanding on when may a TCI state be applied in the switched cell, is a problem to be solved.

For at least one of the above problems, the embodiments of the present disclosure provide a method and an apparatus for information reception and information transmission.

### Embodiments of a first aspect

Embodiments of the present disclosure provide an information reception method, applied in a terminal equipment side.

FIG. 3 is a schematic diagram of an information reception method in the embodiments of the present disclosure, as shown in FIG. 3, the method includes:
301, a terminal equipment receives first indication information, wherein the first indication information indicates a first TCI state and cell switch; and
302, the terminal equipment transmits feedback information (HARQ-ACK), wherein after at least a first time interval is passed after a last symbol of the feedback information (HARQ-ACK), the indicated first TCI state is applied in a switched cell.

By using the first indication information, a terminal equipment is indicated with the first TCI state and cell switch, and the terminal equipment applies the indicated first TCI state in a switched cell after at least a first time interval is passed after a last symbol of the feedback information (HARQ-ACK). Thereby, a situation in which the terminal equipment and a network device have ambiguity about when the TCI state may start to be applied in switched cells can be avoided, thereby achieving fast beam switching and cell switch.

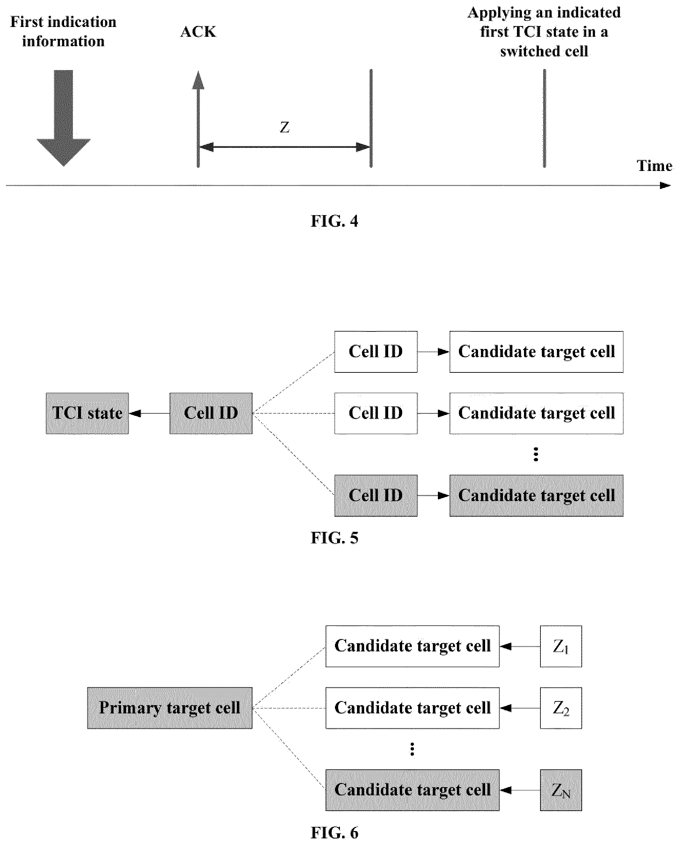

It should be noted that the above FIG. 3 is only schematic description of the embodiments of the present disclosure, by taking the terminal equipment as an example, but the present disclosure is not limited to this. For example, an execution step of each operation may be adjusted appropriately, moreover other some operations may be added or one or more operations may be removed. In addition, objects of the above operations may further be adjusted. Persons skilled in the art may make appropriate modifications according to the above contents, not limited to the records in the above FIG. 4.

In some embodiments, the terms, for example, "TCI state" and "beam" are used interchangeably. "Cell" may be equivalently replaced by "carrier"; a method applicable to the following "simultaneous TCI update list" is also applicable to "master cell group" or "secondary cell group", i.e., replacing "simultaneous TCI update list" with "master cell group" or "secondary cell group"; the above content is only exemplary description, the embodiments of the present disclosure are not limited to this.

FIG. 4 is another schematic diagram of a signaling transmission and reception process in the embodiments of the present disclosure. As described in FIG. 4, the signaling (first indication information, which may be also called switch signaling) indicating a TCI state and cell switch may be DCI and/or a MAC CE. The terminal equipment receives the switch signaling transmitted by a serving cell, and transmits an ACK for the DCI and/or a PDSCH. The serving cell may also be called a source cell, the number of which may be one or more. The ACK may also be equivalently replaced with HARQ-ACK. It takes time for the terminal equipment to switch a cell and apply an indicated TCI state. Therefore, the indicated TCI state may be applied in a switched cell only after at least a first time interval (Z) after the last symbol of the ACK. Unit of the first time interval (Z) may be a symbol, or a millisecond, or a slot.

In some embodiments, first configuration information is received, wherein the first configuration information is used to configure one or more candidate target cells.

For example, before receiving the first indication information (switch signaling), the terminal equipment is configured with one or more candidate target cells, and is provided with configuration information related to the candidate target cell(s). The switch signaling indicates the terminal equipment to switch to one or more of the candidate target cells. The configuration information indicates the terminal equipment necessary information required for using a candidate target cell after switch, for example referring to relevant information in a cell switch process in relevant arts, the present disclosure does not make limitations in this regard.

In some embodiments, the first indication information indicates one candidate target cell as a primary target cell in the configured one or more candidate target cells.

For example, the first indication information at least indicates the following, including:
indicating a TCI state applied in a switched cell;
indicating a terminal equipment to perform cell switch;
indicating a primary target cell, optionally, the first indication information may additionally indicate one or more additional candidate target cells.

For example, the first indication information indicates the terminal equipment to switch to one or more candidate target cells, wherein the primary target cell is one of the one or more candidate target cells. For example, the first indication information may indicate the terminal equipment to switch to one candidate target cell, the one candidate target cell being a primary target cell. For example, the first indication information may indicate the terminal equipment to switch to multiple candidate target cells, such as multiple carrier aggregation cells, these cells belong to the same master cell group (MCG) or the same secondary cell group (SCG). If the first indication information indicates multiple candidate target cells, it indicates one candidate target cell as a primary candidate target cell. For example, one candidate target cell is indicated as a primary cell (Pcell) and other candidate target cells are indicated as secondary cells (Scells), or, one candidate target cell is indicated as a primary secondary cell (PScell), and other candidate target cells are indicated as secondary cells, indicated Pcell or PScell is a primary target cell.

In some embodiments, the indicated first TCI state is associated with one cell that is a primary target cell or a cell other than the primary target cell.

For example, the indicated first TCI state is associated with one cell, this cell is a primary target cell.

FIG. 5 is a schematic diagram of associating a TCI state with a cell in the embodiments of the present disclosure.

As shown in FIG. 5, for example, the first indication information (switch signaling) indicates a TCI state that is associated with a cell ID, this cell is a primary target cell. The terminal equipment is configured with N candidate target cells and is provided with a cell ID of each candidate target cell. Thereby, based on the cell ID, which candidate target cell is the primary target cell indicated by the switch signaling may be determined. There is no restriction on a specific form of the cell ID. For example, it may be a physical cell ID (PCI). The cell associated with a TCI state may be a non-serving cell, the present disclosure does not make limitations in this regard.

For example, the indicated first TCI state is associated with one cell, this cell is a cell other than the primary target cell.

For example, the first indication information (switch signaling) (DCI or MAC CE) indicates one first cell as a primary target cell, and indicates one TCI state, wherein the TCI state is associated with one second cell which may be different from the first cell. The terminal equipment may use beams of the second cell in the first cell, thereby beam selection is more flexible, so that the terminal equipment can always use the best beam(s). The cell associated with a TCI state may be a non-serving cell, the present disclosure does not make limitations in this regard.

In some embodiments, switched cell(s) include: a primary target cell, or a primary target cell and one or more candidate target cells other than the primary target cell, wherein the primary target cell and the one or more candidate target cells other than the primary target cell belong to the same simultaneous TCI update list (simultaneousTCI-UpdateList), and/or, belong to the same master cell group (MCG), and/or, belong to the same secondary cell group (SCG).

For example, "a switched cell" and "a cell indicated by switch signaling" are not necessarily the same. "Switched cell" specifically refers to a switched cell in which an indicated TCI state is applied, i.e., a switched cell in which an indicated beam is applied. "Cells indicated by switch signaling" generally refers to switched cells, but these cells do not necessarily apply the indicated TCI state. For example, the switch signaling indicates one primary target cell and N1 candidate target cells belonging to the same master cell group, but cells applying the indicated TCI state only include a primary target cell and N2 candidate target cells belonging to the same simultaneous TCI update list, where N2 < N1. In this situation, "switched cells" is a subset of "cells indicated by switch signaling". For another example, the switch signaling only indicates one primary target cell, but cells applying the indicated TCI state include a primary target cell and N2 candidate target cells belonging to the same simultaneous TCI update list. In this situation, "cells indicated by switch signaling" is a subset of "switched cells".

For example, the switch signaling indicates one or more candidate target cells, one of which serves as a primary target cell. After receiving a switch signal, the terminal equipment will be switched to one or more candidate target cells, and applies relevant configuration information. In some implementations, the indicated TCI state is only applied in a primary target cell. For example, the primary target cell is a non-carrier aggregation (CA) cell.

For example, the primary target cell does not belong to any one of simultaneous TCI update lists.

For example, although the primary target cell and other M1 candidate target cells belong to the same simultaneous TCI update list, the indicated TCI state is still applied only in the primary target cell. This is because in order to apply a beam in multiple cells simultaneously, the first time interval (Z) needs to be determined according to a maximum time interval in the multiple cells. In order to apply the beam in cell switch more quickly, the beam may be applied only in the primary target cell, thereby not to be affected by other cells that require a larger time interval, and switch can be completed more quickly via the primary target cell.

For example, if a terminal equipment applies one indicated TCI state within a switch interruption time, the terminal equipment applies the indicated TCI state only in the primary target cell, that is, does not use a simultaneous TCI update list. TCI state here is not limited to a TCI state indicated by the switch signal, but may further be a TCI state indicated by other signaling only indicating beams. On the contrary, if the terminal equipment applies one indicated TCI state outside of the switch interrupt time, the terminal equipment uses the simultaneous TCI update list, i.e., reuses Rel-17 ICBM.

In some embodiments, the indicated TCI state is applied in a primary target cell and one or more candidate target cells.

For example, in the case of carrier aggregation, the primary target cell may aggregate other candidate target cells. The terminal equipment is switched to the primary target cell, and also to other candidate target cells aggregated by it. Configuration information may indicate which candidate target cells belong to the same master cell group or secondary cell group. For example, the indicated TCI state is applied in all cells that belong to the same master cell group or secondary cell group. Thus, the switched cells may include one indicated primary target cell and include one or more other candidate target cells that belong to the same master cell group or secondary cell group as the primary target cell. Configuration information may indicate which candidate target cells in one master cell group or secondary cell group belong to the same simultaneous TCI update list. For example, the indicated TCI state is applied in all cells that belong to the same simultaneous TCI update list. Thus, the switched cells may include one indicated primary target cell and include one or more other candidate target cells that belong to the same simultaneous TCI update list as the primary target cell.

In some embodiments, the indicated first TCI state is different from the indicated third TCI state before the terminal equipment is indicated with the first TCI state.

For example, under the condition that the indicated first TCI state is different from the third TCI state previously indicated to the terminal equipment, the terminal equipment applies the indicated first TCI state in the switched cell based on the method described above. The previously indicated third TCI state is indicated by signaling that only indicating a TCI state, or by signaling that simultaneously indicating a TCI state and cell switch.

In some embodiments, second indication information is received after receiving the first indication information, wherein the second indication information indicates a second TCI state; in a case where a first cell set in which the indicated first TCI state is applied is a subset of a second cell set in which the indicated second TCI state is applied, the indicated second TCI state is applied in the second cell set, wherein the second TCI state is identical to the first TCI state.

For example, the terminal equipment receives the switch signaling, although an indicated primary target cell belongs to a simultaneous TCI update list, since the first TCI state is indicated by the switch signaling, the terminal equipment applies the indicated first TCI state only in the primary target cell and not in all cells included in the simultaneous TCI update list. Therefore, a first cell set that applies the first TCI state only includes the primary target cell in the simultaneous TCI update list. After that, the terminal equipment receives signaling indicating a TCI state, which indicates one second TCI state for the simultaneous TCI update list. Since the second TCI state is not indicated by the switch signaling, the terminal equipment applies the second TCI state in all cells included in the simultaneous TCI update list. Therefore, a second cell set that applies the second TCI state includes all cells in the simultaneous TCI update list, and the first cell set that applies the first TCI state is a subset of the second cell set that applies the second TCI state. Although the second TCI state is the same as the first TCI state, the terminal equipment also needs to perform the above operations of applying the TCI states, i.e., applying the TCI states in the second cell set different from the first cell set.

In some embodiments, the first TCI state is applied to at least one of the following channels or signals in the primary target cell: an SSB; a PRACH; a Type 1 physical downlink control channel common search space set (Type1-PDCCH CSS set); a CORESET associated with the Type1-PDCCH CSS set; a Type 2 physical downlink control channel common search space set (Type2-PDCCH CSS set); a CORESET associated with the Type2-PDCCH CSS set; or, a PUSCH scheduled by a random access response (RAR) UL grant.

For example, the indicated TCI state is applied to the primary target cell, i.e. the terminal equipment uses an indicated beam in the primary target cell. More specifically, the indicated TCI state is applied to at least one of the following channels or signals in the primary target cell, which includes:
an SSB; for example, the terminal equipment may receive the SSB using an indicated beam to obtain downlink synchronization with the primary target cell;
a PRACH; for example, the terminal equipment may transmit a PRACH preamble (Msg1) using an indicated beam to obtain uplink synchronization with the primary target cell via a random access procedure;
a Type1-PDCCH CSS set; for example, the terminal equipment receives a PDCCH with CRC is scrambled by a RA-RNTI or TC-RNTI by using an indicated beam in the Type1-PDCCH CSS set, i.e., a PDCCH that schedule Msg2 or Msg4;
a CORESET associated with the Type1-PDCCH CSS set; for example, the terminal equipment receives a PDCCH with CRC is scrambled by a RA-RNTI or TC-RNTI by using an indicated beam in the CORESET associated with the Type1-PDCCH CSS set;
a Type2-PDCCH CSS set; for example, the terminal equipment receives a PDCCH with CRC is scrambled by a P-RNTI by using an indicated beam in the Type2-PDCCH CSS set, i.e., a PDCCH that schedule paging messages;
a CORESET associated with the Type2-PDCCH CSS set; for example, the terminal equipment receives a PDCCH with CRC is scrambled by a P-RNTI by using an indicated beam in the CORESET associated with the Type2-PDCCH CSS set; and
a PUSCH scheduled by a RAR UL grant; for example, the terminal equipment transmits the PUSCH scheduled by a RAR UL grant by using an indicated beam, i.e., Msg3.

In some embodiments, each candidate target cell in configured one or more candidate target cells is associated with one first time interval, and at least a first time interval being passed includes a first time interval with which a primary target cell is associated being passed.

For example, after the primary target cell is determined according to the first indication information, the first time interval (Z) corresponding to the primary target cell can be obtained. After at least a first time interval (Z) corresponding to the primary target cell is passed after a last symbol of feedback information (HARQ-ACK), indicated first TCI state is applied in a switched cell.

FIG. 6 is a schematic diagram of determining a first time interval in the embodiments of the present disclosure.

For example, as described in FIG. 6, the terminal equipment is configured with N candidate target cells, and the candidate target cell n is associated with or corresponds to one first time interval Zn, n = 1, 2, ..., N. Assuming that the switch signaling indicates a candidate target cell as a primary target cell, the time interval (Z_{N}) associated with the primary target cell is considered to be the first time interval Z.

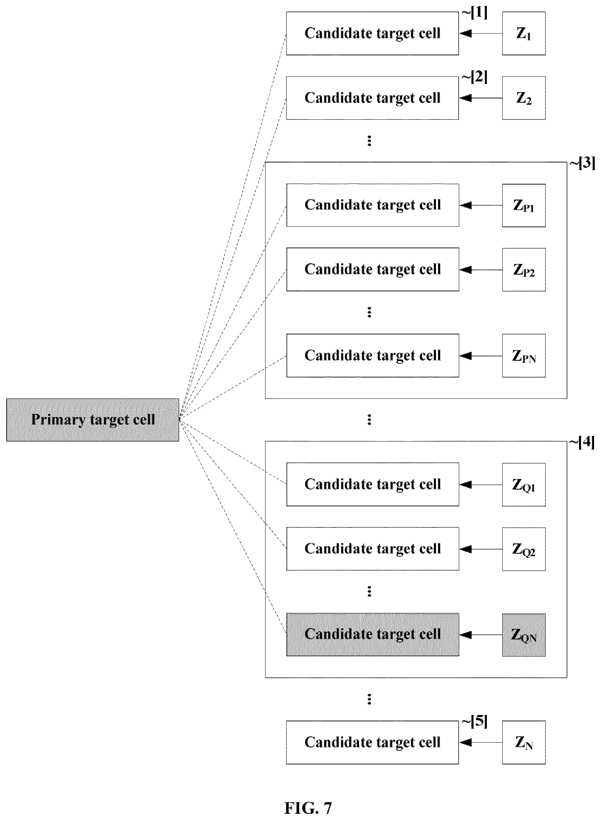

FIG. 7 is another schematic diagram of determining a first time interval in the embodiments of the present disclosure.

For example, as shown in FIG. 7, N candidate target cells include candidate target cells that belong to the same simultaneous TCI update list, and/or, candidate target cells that do not belong to any simultaneous TCI update list. Candidate target cells in [3] in FIG. 7 belong to the same simultaneous TCI update list, and each candidate target cell is associated with one time interval. Similarly, each candidate target cell in [4] in FIG. 7 is associated with one time interval. Candidate target cells in [1], [2] and [5] in FIG. 7 do not belong to any one simultaneous TCI update list and, as described above, are each associated with one time interval. Without loss of generality, "the simultaneous TCI update list" described above may also be equivalently replaced with "a master cell group" or "a secondary cell group". Assuming that the switch signaling indicates a candidate target cell as a primary target cell, the time interval (Z_{QN}) associated with the primary target cell is considered to be the first time interval Z.

In some embodiments, the first time intervals associated with candidate target cells belonging to the same simultaneous TCI update list (simultaneousTCI-UpdateList), and/or, belonging to the same master cell group (MCG), and/or, belonging to the same secondary cell group (SCG) are identical.

As shown in FIG. 7, N candidate target cells include candidate target cells that belong to a simultaneous TCI update list, and/or, candidate target cells that do not belong to any simultaneous TCI update list. Candidate target cells in [3] in FIG. 7 belong to the same simultaneous TCI update list, although each candidate target cell is associated with one time interval, these time intervals are identical, i.e., Z_{P1} = Z_{P2} = ... = Z_{PN}. Similarly, time intervals associated with candidate target cells in [4] in FIG. 7 meet Z_{Q1} = Z_{Q2} = ... = Z_{QN}. Identical time intervals enable multiple carrier aggregation cells to simultaneously apply a TCI state, for example, simultaneously using an analog receiving beam or an analog transmitting beam, which helps simplify implementation of a terminal equipment. On the contrary, if the terminal equipment needs to simultaneously form different analog beams, the terminal equipment may not be able to be implemented, or high implementation complexity is required. Candidate target cells in [1], [2] and [5] in FIG. 7 do not belong to any one simultaneous TCI update list and, as described above, are each associated with one time interval.

In some embodiments, each candidate target cell in the configured one or more candidate target cells is associated with one first time interval, at least a first time interval being passed includes a maximum time interval in the first time interval, with which the primary target cell and the candidate target cells belonging to the same simultaneous TCI update list (simultaneousTCI-UpdateList), and/or, belonging to the same master cell group (MCG), and/or, belonging to the same secondary cell group (SCG) are associated, being passed.

For example, the terminal equipment applies an indicated TCI state in a switched cell. The switched cells include one primary target cell and one or more candidate target cells, wherein the primary target cell and the candidate target cell(s) belong to the same simultaneous TCI update list, and/or, the same master cell group, and/or, the same secondary cell group. The terminal equipment uses the first time interval Z, wherein the first time interval Z is a maximum time interval in time intervals, with which the primary target cell and the candidate target cells belonging to the same simultaneous TCI update list, and/or, the same master cell group, and/or, the same secondary cell group are associated. Through this method, the terminal equipment may start using the indicated TCI state at the same time in the above set of primary target cells and candidate target cells, regardless of whether a time interval with which each candidate target cell is associated is identical.

In some embodiments, the first time interval associated with the candidate target cell is one or more symbols, wherein the one or more symbols is determined according to a first reference cell, the first reference cell including one of the following: the candidate target cell associated with the first time interval; a candidate target cell with a minimum subcarrier spacing in candidate target cells belonging to the same simultaneous TCI update list (simultaneousTCI-UpdateList), and/or, belonging to the same master cell group (MCG), and/or, belonging to the same secondary cell group (SCG) as the candidate target cells associated with the first time intervals; a candidate target cell with a minimum subcarrier spacing in the configured one or more candidate target cells; or, a serving cell with a minimum subcarrier spacing in serving cells.

For example, the terminal equipment is configured with N candidate target cells, and the candidate target cell n is associated with Zₙ symbols, n = 1, 2, ..., N. If the candidate target cell n does not belong to any one simultaneous TCI update lists, the Zₙ symbols are determined based on the candidate target cell n. In other words, the Zₙ symbols refer to Zₙ symbols of the candidate target cell n, or the Zₙ symbols are determined based on a subcarrier spacing of the candidate target cell n. The candidate target cell with a minimum subcarrier spacing in candidate target cells belonging to one simultaneous TCI update list (simultaneousTCI-UpdateList) is denoted as a candidate target cell m, and if the candidate target cell n also belongs to this simultaneous TCI update list, Zₙ symbols are determined based on the candidate target cell m. In other words, the Zₙ symbols refer to Zₙ symbols of the candidate target cell m, or the Zₙ symbols are determined based on a subcarrier spacing of the candidate target cell m.

For another example, regardless of whether the candidate target cell n belongs to one simultaneous TCI update list, the Zₙ symbols are determined based on the candidate target cell n. In other words, in a case where the candidate target cell n belongs to one simultaneous TCI update list, the Zₙ symbols are determined based on the candidate target cell n rather than the candidate target cell with a minimum subcarrier spacing in candidate target cells belonging to one simultaneous TCI update list. Thereby, an indicated TCI state may be applied to one primary target cell more quickly, thus fast achieving switch to the one primary target cell. Switch to other candidate target cells belonging to the same simultaneous TCI update list as the primary target cell may continue to be completed later.

For a further example, the terminal equipment is configured with N candidate target cells, and the candidate target cell n is associated with Zₙ symbols, n = 1, 2, ..., N. The Zₙ symbols are determined based on a candidate target cell with a minimum subcarrier spacing in N candidate target cells, or are determined based on a serving cell with a minimum subcarrier spacing in serving cells.

In some embodiments, the first time interval Z is one or more symbols, wherein the symbols are determined according to a reference cell, the reference cell being one of the following: a primary target cell; a cell with a minimum subcarrier spacing in switched cells; a candidate target cell with a minimum subcarrier spacing in all candidate target cells; or, a serving cell with a minimum subcarrier spacing in all serving cells.

For example, the first time interval Z is a time interval associated with the primary target cell indicated by the switch signaling. The switched cell may only include one primary target cell, and one or more symbols of a time interval associated with one candidate target cell may be determined based on the candidate target cell, thus the following conclusion is met: one or more symbols of the first time interval Z are determined based on the primary target cell. The switched cells may include a primary target cell and other candidate target cells belonging to the same simultaneous TCI update list, and one or more symbols of a time interval associated with one candidate target cell may be determined based on a candidate target cell with a minimum subcarrier spacing in multiple candidate target cells belonging to the same simultaneous TCI update list, thus the following conclusion is also met: one or more symbols of the first time interval Z are determined based on a cell with a minimum subcarrier spacing in switched cells. The switched cell may be equivalently replaced with a cell that applies the indicated TCI state. Other modes of determining the reference cell are similar to the abovementioned situations of determining the reference cell for a time interval associated with a candidate target cell, and are not repeated.

In some embodiments, the indicated first TCI state is applied in the switched cells starting from a first slot after at least a first time interval is passed after the last symbol of the feedback information (HARQ-ACK), wherein the first slot is determined according to a second reference cell, the second reference cell including one of the following: the primary target cell; or a cell with a minimum subcarrier spacing in the switched cells.

For example, as shown in FIG. 4, the terminal equipment applies the indicated TCI state in a switched cell after at least a first time interval Z after the last symbol of the ACK. Further, the terminal equipment starts applying the indicated TCI state from the first slot after Z; the first slot is determined according to the second reference cell.

For example, as shown in FIG. 2, the terminal equipment applies the indicated TCI state in a switched cell after at least one time interval Y after the last symbol of the ACK, i.e., reuses the time interval Y in Rel-17 ICBM. Further, the terminal equipment starts applying the indicated TCI state from the first slot after Y. The first slot is determined according to the second reference cell.

For example, the terminal equipment applies the indicated TCI state in multiple carrier aggregation cells, and the first slot is determined based on a cell with a minimum subcarrier spacing. In other words, the slot refers to a slot of a cell with a minimum subcarrier spacing, or the slot is determined based on a subcarrier spacing of a cell with a minimum subcarrier spacing. This enables multiple carrier aggregation cells to simultaneously apply a TCI state, for example, simultaneously using an analog receiving beam or an analog transmitting beam, which helps simplify implementation of a terminal equipment. On the contrary, if the terminal equipment needs to simultaneously form different analog beams, the terminal equipment may not be able to be implemented, or high implementation complexity is required.

For example, the terminal equipment applies the indicated TCI state only in the primary target cell, and the first slot is determined based on the primary target cell, that is, the first slot is a first slot of the primary target cell.

For example, the terminal equipment applies the indicated TCI state in multiple carrier aggregation cells, and the first slot is determined based on the primary target cell.

In some embodiments, second configuration information is received, wherein the second configuration information is used to configure one third time interval for each candidate target cell in the configured one or more candidate target cells, or the second configuration information is used to configure the same third time interval for the candidate target cells belonging to the same simultaneous TCI update list (simultaneousTCI-UpdateList), and/or, belonging to the same master cell group (MCG), and/or, belonging to the same secondary cell group (SCG); or the second configuration information is used to configure one third time interval for the configured one or more candidate target cells.

In some embodiments, a first time interval with which one candidate target cell is associated is equal to the third time interval configured for the candidate target cell.

In some embodiments, in a case where the second configuration information is used to configure one third time interval for each candidate target cell in the configured one or more candidate target cells: the third time intervals configured for the candidate target cells belonging to the same simultaneous TCI update list (simultaneousTCI-UpdateList), and/or, belonging to the same master cell group (MCG), and/or, belonging to the same secondary cell group (SCG) are identical.

Descriptions are illustrated below respectively:
For example, a time interval associated with a candidate target cell is configured by a network device via RRC signaling, and the network device configures one third time interval (which may also be called a configured "first time interval Z") for the candidate target cell. "Configure" herein may also be equivalently replaced with "indicate" or "activate". Embodiments of the present disclosure do not limit how to configure, indicate or activate, for example, configuring via RRC signaling, indicating via DCI signaling, indicating or activating via an MAC CE.

For example, the network device configures one third time interval for each candidate target cell in the configured one or more candidate target cells. For example, Z1-Zn in FIG. 6 correspond to one third time interval, respectively.

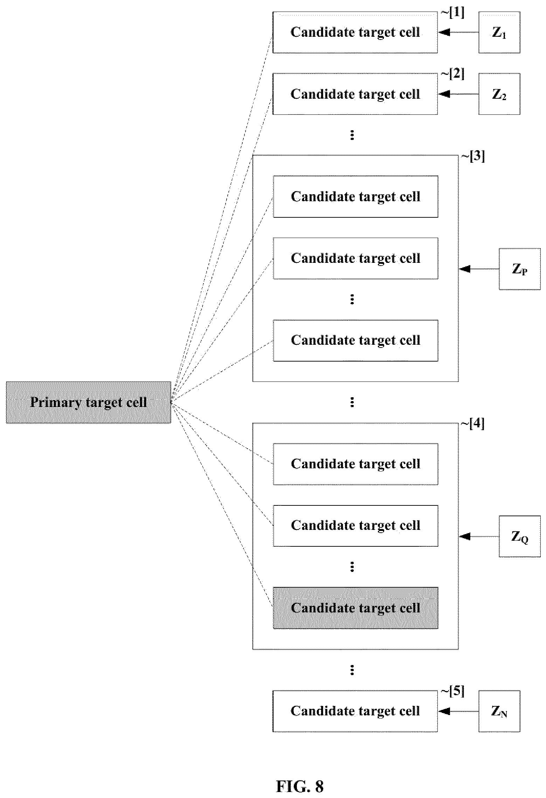

For example, the network device configures the same third time interval for the candidate target cells belonging to the same simultaneous TCI update list (simultaneousTCI-UpdateList), and/or, belonging to the same master cell group (MCG), and/or, belonging to the same secondary cell group (SCG). FIG. 8 is an example diagram of configuring a third time interval in the embodiments of the present disclosure. For example, the network device configures one time interval for multiple candidate target cells belonging to the same simultaneous TCI update list, rather than for each of candidate target cells. For each of the candidate target cells, an associated time interval is a configured time interval, for example, Zp is one configured third time interval described above.

Moreover, in a case where the network device configures one third time interval for each candidate target cell in the configured one or more candidate target cells: the third time intervals configured for the candidate target cells belonging to the same simultaneous TCI update list (simultaneousTCI-UpdateList), and/or, belonging to the same master cell group (MCG), and/or, belonging to the same secondary cell group (SCG) are identical. For example, still refer to the example in FIG. 7, there is no repeated description here.

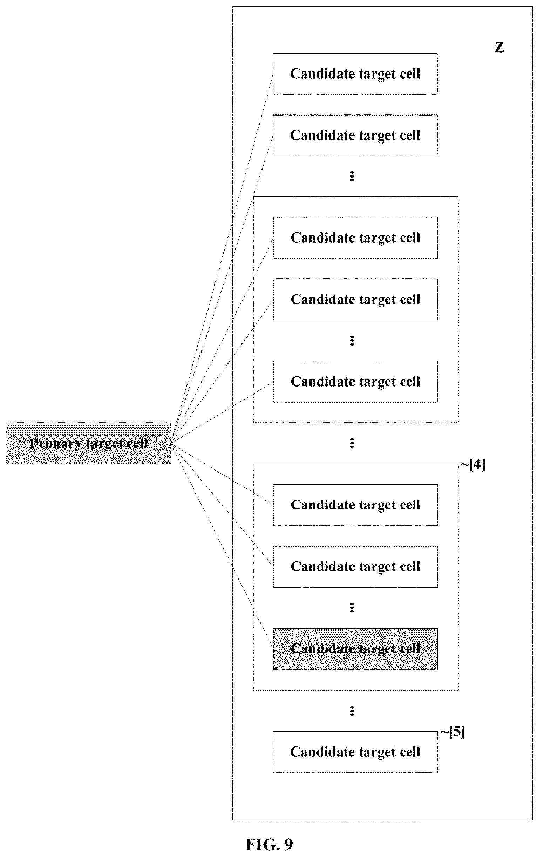

For example, the network device configures one third time interval for the configured one or more candidate target cells. FIG. 9 is another example diagram of configuring a third time interval in the embodiments of the present disclosure. For example, Z in FIG. 9.

In some embodiments, the third time interval is one or more symbols, wherein the one or more symbols are determined according to the first reference cell.

For example, the above method of determining the first time interval may be referred to, there is no repeated description here.

In some embodiments, one second time interval is reported for each candidate target cell in the configured one or more candidate target cells, or the same second time interval is reported for the candidate target cells belonging to the same simultaneous TCI update list (simultaneousTCI-UpdateList), and/or, belonging to the same master cell group (MCG), and/or, belonging to the same secondary cell group (SCG); or one second time interval is reported for the configured one or more candidate target cells.

In some embodiments, a first time interval with which one candidate target cell is associated is equal to the second time interval reported for the candidate target cell.

In some embodiments, in a case where one second time interval is reported for each candidate target cell in the configured one or more candidate target cells, the second time intervals reported for the candidate target cells belonging to the same simultaneous TCI update list (simultaneousTCI-UpdateList), and/or, belonging to the same master cell group (MCG), and/or, belonging to the same secondary cell group (SCG) are identical.

For example, the terminal equipment determines the time interval Z in FIG. 4 for each candidate target cell and reports a minimum time interval (second time interval Z) that can be supported by each candidate target cell as a device capability to the network device.

For example, the network device determines one time interval (first time interval Z) for each candidate target cell based on reporting of the terminal equipment, and configures it to the terminal equipment via RRC signaling. The time interval finally used by the terminal equipment is still a time interval configured by the network device.

Descriptions are illustrated below respectively:
For example, the time interval associated with a candidate target cell is one second time interval reported by the terminal equipment side (which may also be called a reported "first time interval Z"). For example, the terminal equipment reports a minimum time interval (second time interval) that can be supported by each candidate target cell as a device capability to the network device. The network device directly uses this time interval, i.e., does not configure the third time interval to the terminal equipment any more. In this situation, the time interval associated with the candidate target cell is a reported second time interval, that is, the time interval finally used by the terminal equipment is a time interval reported by itself.

For example, first, the terminal equipment is configured with one or more candidate target cells, then the second time interval is reported for each candidate target cell, then the network device configures a third time interval for each candidate target cell, the first time interval Z associated with each candidate target cell is the third time interval, and finally, the switch signaling is received. After the first time interval Z associated with the primary target cell, an indicated beam is applied in a switched cell. After cell switch is completed, the terminal equipment may report the second time interval Y for each serving cell, then is configured with the third time interval Y associated with each serving cell, and after receiving a beam indication signaling, applies an indicated beam after the third time interval Y, that is, uses ICBM of Rel-17 after the cell switch is completed.

For example, the terminal equipment reports one second time interval for each candidate target cell in the configured one or more candidate target cells. For example, still with the help of Z1-Zn in FIG. 6, it is the second time interval reported by the terminal equipment.

For example, the terminal equipment reports the same third time interval for the candidate target cells belonging to the same simultaneous TCI update list (simultaneousTCI-UpdateList), and/or, belonging to the same master cell group (MCG), and/or, belonging to the same secondary cell group (SCG). For example, still with the help of FIG. 8, the terminal equipment reports one time interval for multiple candidate target cells belonging to the same simultaneous TCI update list, rather than for each of candidate target cells. For each of the candidate target cells, an associated time interval is a reported time interval, for example, Zp is one reported second time interval described above.

Moreover, in a case where the terminal equipment reports one second time interval for each candidate target cell in the configured one or more candidate target cells: the third time intervals reported for the candidate target cells belonging to the same simultaneous TCI update list (simultaneousTCI-UpdateList), and/or, belonging to the same master cell group (MCG), and/or, belonging to the same secondary cell group (SCG) are identical. For example, the example in FIG. 7 may be still referred to, there is no repeated description here.

For example, the terminal equipment reports one third time interval for the configured one or more candidate target cells. For example, the terminal equipment does not distinguish candidate target cells and only reports one second time interval Z. For example, FIG. 9 may be still used, the terminal equipment only reports one second time interval Z.

In some embodiments, the network device directly uses the second time interval reported by the terminal equipment, i.e., does not configure the third time interval to the terminal equipment any more. Optionally, the network device may further configure the third time interval using either of the methods described above, based on the second time interval reported by the terminal equipment.

For example, the network device and the terminal equipment directly use the second time interval as a first time interval associated with one candidate target cell; or, the network device configures the third time interval for the terminal equipment based on reporting of the terminal equipment, and the first time interval associated with one candidate target cell, as finally used by the terminal equipment, is still a time interval configured by the network device.

In some embodiments, the second time interval is one or more symbols, wherein the one or more symbols are determined according to the first reference cell.

For example, the above method of determining the first time interval may be referred to, there is no repeated description here.

In some embodiments, the method further includes: receiving third configuration information, wherein the third configuration information is used to configure an inter-cell beam management mode or a cell switch mode.

For example, assuming that the terminal equipment receives a TCI state indicated by DCI, and the TCI state is associated with one non-serving cell. If the terminal equipment is configured with the inter-cell beam management mode, the terminal equipment does not perform cell switch and performs beam switching, thereby beams of a non-serving cell may be used. If the terminal equipment is configured with the cell switch mode, the terminal equipment is switched to a non-serving cell associated with the TCI state, and performs beam switching to use beams of the non-serving cell. The non-serving cell is one of the configured candidate target cells, thereby the terminal equipment can quickly apply a configuration of the non-serving cell after switch. If the terminal equipment is configured with the cell switch mode, DCI indicating a TCI state of the non-serving cell is signaling indicating the TCI state and cell switch.

In some embodiments, the first indication information is first DCI and/or a first MAC CE.

In some embodiments, the first DCI is DCI without downlink assignment, the CRC of the first DCI is scrambled using a CS-RNTI, or the first DCI is DCI with downlink assignment, the CRC of the first DCI is scrambled using a C-RNTI.

In some embodiments, the first indication information is first DCI and a first MAC CE, wherein the first DCI is DCI with downlink assignment, the CRC of the first DCI is scrambled using a C-RNTI, the first DCI indicates the first TCI state, and the first MAC CE indicates cell switch.

In some embodiments, the first indication information further indicates a CS-RNTI, wherein the CS-RNTI scrambles a CRC of the second DCI for updating a TCI state.

For example, the first DCI indicating a TCI state of a non-serving cell is DCI that schedules a PDSCH, or is called DCI with downlink assignment (DCI with DL assignment), the CRC of the first DCI is scrambled using a C-RNTI, one or more fields of the first DCI or one or more fields of the first MAC CE may indicate that the terminal equipment needs to perform cell switch. The above DCI and/or MAC CE are signaling (first indication information) indicating the first TCI state and cell switch. The MAC CE is carried by a PDSCH scheduled by DCI.

For example, the DCI indicating a TCI state of the non-serving cell is DCI that does not schedules a PDSCH, or is called DCI without downlink assignment (DCI without DL assignment), the CRC of the DCI is scrambled using a CS-RNTI, and one or more fields of the DCI may indicate that the terminal equipment needs to perform cell switch. The above DCI is signaling (first indication information) indicating the TCI state and cell switch. The MAC CE is carried by a PDSCH scheduled by DCI.

In some embodiments, the signaling indicating the TCI state and the cell switch further indicates a CS-RNTI.

For example, the first indication information further indicates a CS-RNTI in addition to a target cell and a TCI state which are used after switch. DCI without downlink assignment may indicate a TCI state without data scheduling, that is, only indicate a beam and does not schedule data, thereby the TCI state may be updated more quickly and flexibly, that is, there is no need to wait until there is data scheduling to indicate the beam. CRC of the DCI is scrambled using a CS-RNTI. However, after the cell switch, a CS-RNTI of an original serving cell has been invalid. In order to be able to indicate the beam after the cell switch by quickly using the DCI whose CRC is scrambled by the CS-RNTI, the CS-RNTI may be indicated in the signaling indicating the TCI state and the cell switch.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, the terminal equipment is configured with one or more candidate target cells, each candidate target cell is associated with one time interval. The terminal equipment is indicated to switch to a candidate target cell and apply a TCI state associated with the candidate target cell in the target cell after the time interval with which the candidate target cell is associated. Through the method herein, a situation in which the terminal equipment and a network device have ambiguity about when the TCI state may start to be applied in switched cells can be avoided, thereby achieving fast beam switching and cell switch.

### Embodiments of a second aspect

Embodiments of the present disclosure provide an information reception method, applied in a terminal equipment side. Embodiments of the present disclosure may be combined with the embodiments of the first aspect, or may be implemented separately. The contents same as the embodiments of the first aspect are not repeated.

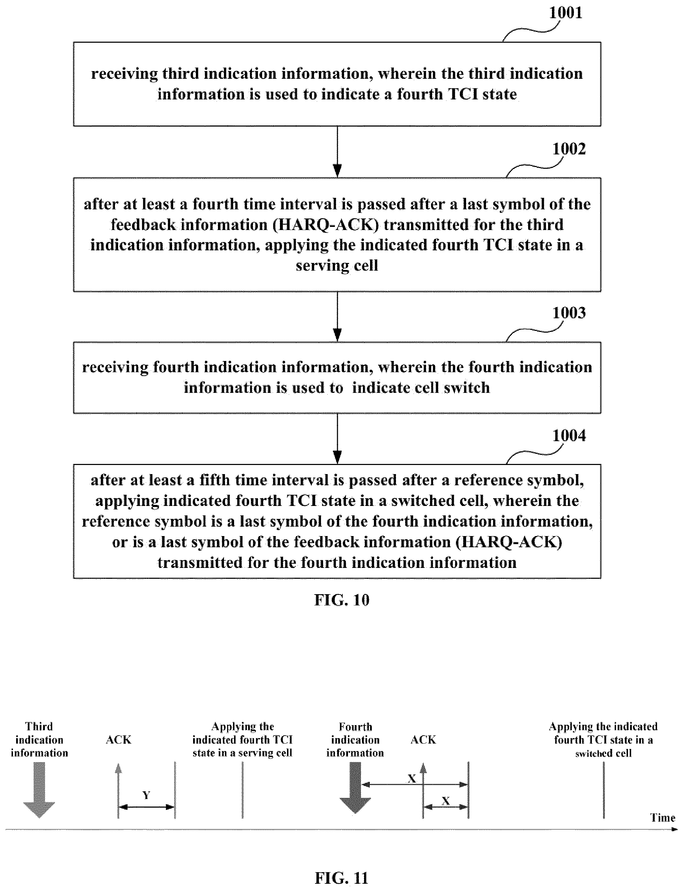

FIG. 10 is another schematic diagram of an information reception method in the embodiments of the present disclosure, as shown in FIG. 10, the method includes:
1001, a terminal equipment receives third indication information, wherein the third indication information indicates a fourth TCI state;
1002, after at least a fourth time interval is passed after a last symbol of the feedback information (HARQ-ACK) transmitted for the third indication information, the terminal equipment applies the indicated fourth TCI state in a serving cell;
1003, the terminal equipment receives fourth indication information, wherein the fourth indication information indicates cell switch; and
1004, after at least a fifth time interval is passed after a reference symbol, the terminal equipment applies the indicated fourth TCI state in a switched cell, wherein the reference symbol is a last symbol of the fourth indication information, or is a last symbol of the feedback information (HARQ-ACK) transmitted for the fourth indication information.

Thereby, by using the third indication information and the fourth indication information, the terminal equipment is capable of applying an indicated fourth TCI state in a switched cell. Thereby, a situation in which the terminal equipment and a network device have ambiguity about when the TCI state may start to be applied in switched cells can be avoided, thereby achieving fast beam switching and cell switch.

FIG. 11 is a further schematic diagram of a signaling transmission and reception process in the embodiments of the present disclosure.

As shown in FIG. 11, the terminal equipment performs beam switching first, then performs cell switch, and applies the indicated TCI state in a switched cell in two steps.

For example, the terminal equipment receives third signaling indicating a TCI state, the signaling only indicates beam switching and does not indicate cell switch, i.e., indicates a fourth TCI state, for example, the signaling may follow to use the TCI state indication signaling in inter-cell beam management to indicate the terminal equipment to use beams of a non-serving cell and not to switch a cell, thus the terminal equipment applies an indicated fourth TCI state in a serving cell after at least a fourth time interval (Y) is passed after a last symbol of ACK for the third indication information. For more details, inter-cell beam management relevant arts may be referred to, specific description is not repeated. At this moment, the terminal equipment completes beam switching to the non-serving cell. At some later moment, the terminal equipment receives fourth indication information indicating cell switch, the indication information only indicates cell switch. In other words, the signaling does not indicate a TCI state or does not indicate an updated TCI state. The terminal equipment needs to perform cell switch, so as to be able to apply the indicated TCI state in the non-serving cell. The terminal equipment applies the indicated fourth TCI state in a switched cell after at least a fifth time interval (X) is passed after a last symbol of the fourth indication information, or, the terminal equipment applies the indicated fourth TCI state in a switched cell after at least a fifth time interval (X) is passed after a last symbol of ACK transmitted for the fourth indication information.

The network device may configure the time interval X using any one of the previously described methods for configuring "the third time interval". The terminal equipment may report the time interval X using any one of the previously described methods for reporting "the second time interval".

In some embodiments, the embodiments of the second aspect may be combined with the embodiments of the first aspect, the description is made below.

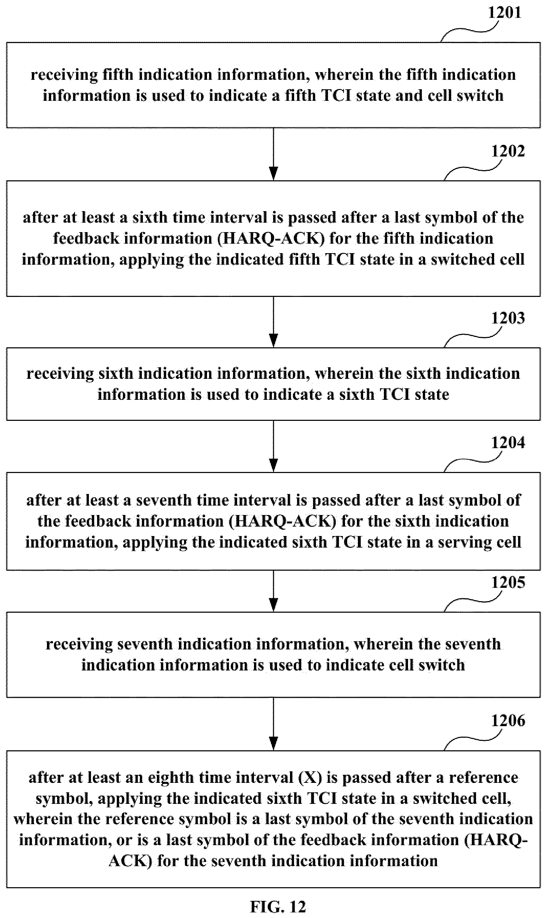

FIG. 12 is another schematic diagram of an information reception method in the embodiments of the present disclosure, as shown in FIG. 12, the method includes:
1201, a terminal equipment receives fifth indication information, wherein the fifth indication information indicates a fifth TCI state and cell switch;
1202, after at least a sixth time interval is passed after a last symbol of the feedback information (HARQ-ACK) for the fifth indication information, the terminal equipment applies the indicated fifth TCI state in a switched cell;
1203, the terminal equipment receives sixth indication information, wherein the sixth indication information indicates a sixth TCI state;
1204, after at least a seventh time interval is passed after a last symbol of the feedback information (HARQ-ACK) for the sixth indication information, the terminal equipment applies the indicated sixth TCI state in a serving cell;
1205, the terminal equipment receives seventh indication information, wherein the seventh indication information indicates cell switch; and
1206, after at least an eighth time interval is passed after a reference symbol, the terminal equipment applies the indicated sixth TCI state in a switched cell, wherein the reference symbol is a last symbol of the seventh indication information, or is a last symbol of the feedback information (HARQ-ACK) for the seventh indication information.

For example, the method shown in FIG. 12 is for a situation in which scenarios in FIG. 11 and FIG. 4 coexist.

For example, the fifth TCI state is the same as the first TCI state in the embodiments of the first aspect; the sixth TCI state is the same as the fourth TCI state in the embodiments of the second aspect; the sixth time interval (Z) is the same as the first time interval (Z) in the embodiments of the first aspect; the seventh time interval (Y) is the same as the fourth time interval (Y) in the embodiments of the second aspect; and the eighth time interval (X) is the same as the fifth time interval (X) in the embodiments of the second aspect.

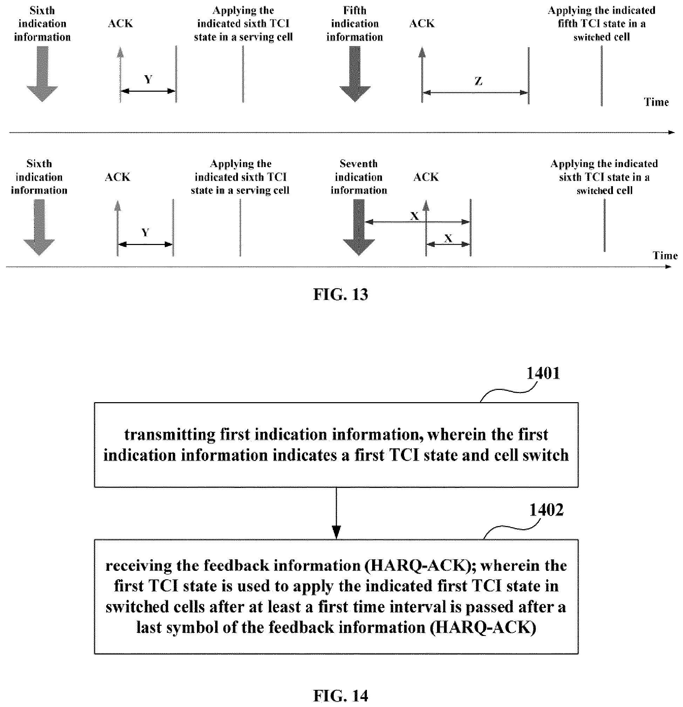

FIG. 13 is a further schematic diagram of a signaling transmission and reception process in the embodiments of the present disclosure.

As shown in FIG. 13, after the sixth TCI state indicated via the sixth indication information, the network device will indicate the terminal equipment to switch to a primary target cell via the seventh indication information or the fifth indication information. If the network device finds that a more suitable beam (corresponding to the fifth TCI state) can be applied in the primary target cell, that is, beams of the primary target cell have changed, and it is necessary to change the beams, as shown in the above figure in FIG. 13, both the fifth TCI state and the cell switch may be indicated in the fifth indication information. That is, the TCI state indication and the cell switch indication in FIG. 4 are applied based on FIG. 11, thereby to be switched to the suitable beam more quickly. In this situation, it is equivalent to switching from the scenario in FIG. 11 to the scenario in FIG. 4, the terminal equipment applies the fifth TCI state in the primary target cell based on Figure 4 and its relevant method. If the network device finds that it is not necessary to change the beams, as shown in the figure below in FIG. 13, only cell switch is indicated via the seventh indication information, and the sixth TCI state indicated by the sixth indication information is still applied.

In some embodiments, the terminal equipment further reports a ninth time interval and a tenth time interval; receives fourth configuration information, the fourth configuration information being used to configure an eleventh time interval, a twelfth time interval and a thirteenth time interval.

For example, the ninth time interval and the tenth time interval are similar to "the second time interval" in the embodiments of the first aspect; and the eleventh time interval, the twelfth time interval and the thirteenth time interval are similar to "the third time interval" in the embodiments of the first aspect.

For example, the ninth time interval corresponds to "the seventh time interval" (Y), and the tenth time interval corresponds to "the eighth time interval" (X); and the eleventh time interval corresponds to "the eighth time interval" (X), the twelfth time interval corresponds to "the seventh time interval" (Y), and the thirteenth time interval corresponds to "the sixth time interval" (Z).

For example, the terminal equipment follows to use inter-cell beam management relevant arts to report "the ninth time interval Y" and replaces "the second time interval Z" in the embodiments of the first aspect with "the tenth time interval X". The terminal equipment may report "the tenth time interval X" using any one of the previously described methods for reporting "the second time interval Z". Based on reporting of the terminal equipment, the network device determines "the twelfth time interval Y", "the eleventh time interval X" and "the thirteenth time interval Z", and configures them to the terminal equipment via RRC signaling. The network device may configure "the eleventh time interval X" and "the thirteenth time interval Z" using any one of the previously described methods for configuring "the third time interval Z".

For the previous embodiments, the terminal equipment reports the second time interval Z, and the network device determines and configures the third time interval Z based on the reporting. Unlike the previous embodiments, here, the terminal equipment does not report the second time interval Z, but the network device may determine and configure "the thirteenth time interval Z" based on the reported "tenth time interval X" and "ninth time interval Y". This is because "the thirteenth time interval Z" includes beam switching time and cell switch time, "the tenth time interval X" includes cell switch time, and "the ninth time interval Y" includes beam switch time, and the network device may roughly infer Z based on X and Y. Without loss of generality, the terminal equipment may further report "the ninth time interval Y" and "the second time interval Z", and the network device determines and configures "the eleventh time interval X" based on the reporting.

In addition, the network device configures "the eleventh time interval X", "the twelfth time interval Y" and "the thirteenth time interval Z", which is similar to configuring "the third time interval Z" in the embodiments of the first aspect.

It should be noted that the above FIG. 10 to FIG. 13 only schematically describe the embodiments of the present disclosure, by taking the terminal equipment as an example, but the present disclosure is not limited to this. For example, an execution step of each operation may be adjusted appropriately, moreover other some operations may be added or one or more operations may be removed. In addition, objects of the above operations may further be adjusted. Persons skilled in the art can make appropriate modifications according to the above contents, not limited to the records in the above FIG. 10 to FIG. 12.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, by using the third indication information and the fourth indication information, the terminal equipment is capable of applying an indicated fourth TCI state in a switched cell. Thereby, a situation in which the terminal equipment and a network device have ambiguity about when the TCI state may start to be applied in switched cells can be avoided, thereby achieving fast beam switching and cell switch.

### Embodiments of a third aspect

Embodiments of the present disclosure provide an information transmission method, applied in a network device side. Embodiments of the present disclosure may be combined with the embodiments of the first aspect, or may be implemented separately. The contents same as the embodiments of the first aspect are not repeated.

FIG. 14 is a schematic diagram of an information transmission method in the embodiments of the present disclosure, as shown in FIG. 14, the method includes:
1401, a network device transmits first indication information, wherein the first indication information indicates a first TCI state and cell switch; and
1402, the network device receives the feedback information (HARQ-ACK); wherein the indicated first TCI state is applied in switched cells after at least a first time interval is passed after a last symbol of the feedback information (HARQ-ACK).

In some embodiments, the method further includes: the network device transmits first configuration information, wherein the first configuration information is used to configure one or more candidate target cells.

In some embodiments, the method further includes: the network device transmits second configuration information, wherein the second configuration information is used to configure one third time interval for each candidate target cell in one or more candidate target cells configured by the first configuration information, the first time interval associated with one candidate target cell is equal to the configured third time interval; or, the second configuration information is used to configure the same third time interval for the candidate target cells belonging to the same simultaneous TCI update list (simultaneousTCI-UpdateList), and/or, belonging to the same master cell group (MCG), and/or, belonging to the same secondary cell group (SCG); or, the second configuration information is used to configure one third time interval for the configured one or more candidate target cells.

In some embodiments, the method further includes: the network device transmits third configuration information, wherein the third configuration information is used to configure an inter-cell beam management mode or a cell switch mode.

It should be noted that the above FIG. 14 only schematically describes the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 14.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, the terminal equipment is configured with one or more candidate target cells, each candidate target cell is associated with one time interval. The terminal equipment is indicated to switch to a candidate target cell and apply a TCI state associated with the candidate target cell in the target cell after the time interval with which the candidate target cell is associated. Through the method herein, a situation in which the terminal equipment and a network device have ambiguity about when the TCI state may start to be applied in switched cells can be avoided, thereby achieving fast beam switching and cell switch.

### Embodiments of a fourth aspect

Embodiments of the present disclosure provide an information transmission method, applied in a network device side. Embodiments of the present disclosure may be combined with the embodiments of the second aspect, or may be implemented separately. The contents same as the embodiments of the second aspect are not repeated.

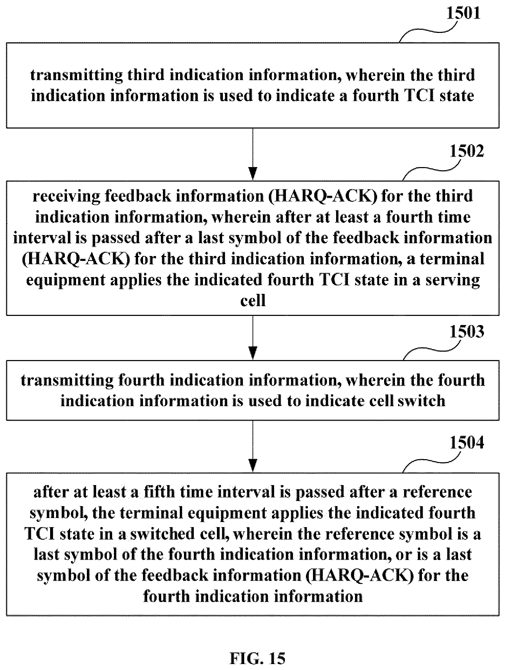

FIG. 15 is another schematic diagram of an information transmission method in the embodiments of the present disclosure, as shown in FIG. 15, the method includes:
1501, a network device transmits third indication information, wherein the third indication information indicates a fourth TCI state;
1502, the network device receives feedback information (HARQ-ACK) for the third indication information, wherein after at least a fourth time interval is passed after a last symbol of the feedback information (HARQ-ACK) for the third indication information, a terminal equipment applies the indicated fourth TCI state in a serving cell;
1503, the network device transmits fourth indication information, wherein the fourth indication information indicates cell switch; and
1504, after at least a fifth time interval is passed after a reference symbol, the terminal equipment applies the indicated fourth TCI state in a switched cell, wherein the reference symbol is a last symbol of the fourth indication information, or is a last symbol of the feedback information (HARQ-ACK) for the fourth indication information.

Thereby, by using the third indication information and the fourth indication information, the terminal equipment is capable of applying an indicated fourth TCI state in a switched cell. Thereby, a situation in which the terminal equipment and a network device have ambiguity about when the TCI state may start to be applied in switched cells can be avoided, thereby achieving fast beam switching and cell switch.

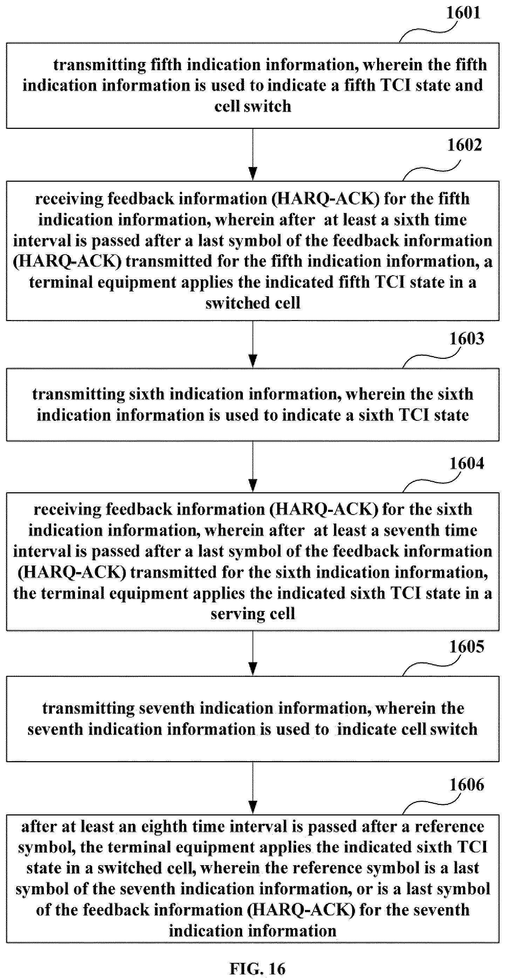

FIG. 16 is a further schematic diagram of an information transmission method in the embodiments of the present disclosure, as shown in FIG. 16, the method includes:
1601, the network device transmits fifth indication information, wherein the fifth indication information indicates a fifth TCI state and cell switch;
1602, the network device receives feedback information (HARQ-ACK) for the fifth indication information, wherein after at least a sixth time interval is passed after a last symbol of the feedback information (HARQ-ACK) transmitted for the fifth indication information, the terminal equipment applies the indicated fifth TCI state in a switched cell;
1603, the network device transmits sixth indication information, wherein the sixth indication information indicates a sixth TCI state;
1604, the network device receives feedback information (HARQ-ACK) for the sixth indication information, wherein after at least a seventh time interval is passed after a last symbol of the feedback information (HARQ-ACK) transmitted for the sixth indication information, the terminal equipment applies the indicated sixth TCI state in a serving cell;
1605, the network device transmits seventh indication information, wherein the seventh indication information indicates cell switch; and
1606, after at least an eighth time interval is passed after a reference symbol, the terminal equipment applies the indicated sixth TCI state in a switched cell, wherein the reference symbol is a last symbol of the seventh indication information, or is a last symbol of the feedback information (HARQ-ACK) for the seventh indication information.

It should be noted that the above FIG. 15 to FIG. 16 only schematically describe the embodiments of the present disclosure, but the present disclosure is not limited to this. For example, an execution step of each operation may be adjusted appropriately, moreover other some operations may be added or one or more operations may be removed. Persons skilled in the art can make appropriate modifications according to the above contents, not limited to the records in the above FIG. 15 to FIG. 16.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, by using the third indication information and the fourth indication information, the terminal equipment is capable of applying an indicated fourth TCI state in a switched cell. Thereby, a situation in which the terminal equipment and a network device have ambiguity about when the TCI state may start to be applied in switched cells can be avoided, thereby achieving fast beam switching and cell switch.

### Embodiments of a fifth aspect

Embodiments of the present disclosure provide an information reception apparatus. The device may, for example, be a terminal equipment, or may be one or more parts or components configured on the terminal equipment. The contents same as the embodiments of the first aspect are not repeated.

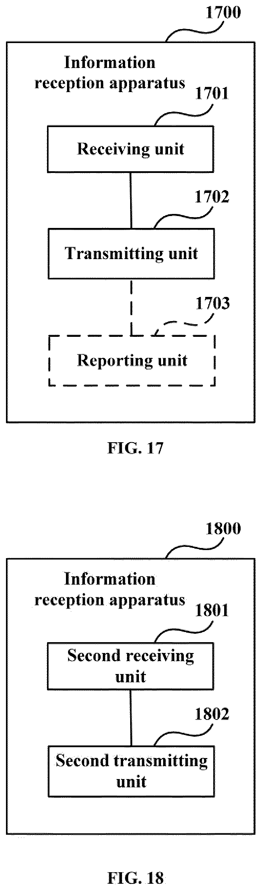

FIG. 17 is a schematic diagram of an information reception apparatus in embodiments of the present disclosure. As shown in FIG. 17, the information reception apparatus 1700 comprises:
a receiving unit 1701 configured to receive first indication information, wherein the first indication information indicates a first TCI state and cell switch; and
a transmitting unit 1702 configured to transmit feedback information (HARQ-ACK), wherein after at least a first time interval is passed after a last symbol of the feedback information (HARQ-ACK), indicated first TCI state is applied in switched cells.

In some embodiments, the receiving unit 1701 is further configured to receive first configuration information, wherein the first configuration information is used to configure one or more candidate target cells.

In some embodiments, the first indication information is used to indicate one candidate target cell as a primary target cell in the configured one or more candidate target cells.

In some embodiments, each candidate target cell in the configured one or more candidate target cells is associated with one first time interval, and at least a first time interval being passed includes a first time interval with which the primary target cell is associated being passed.

In some embodiments, the indicated first TCI state is associated with one cell that is the primary target cell or a cell other than the primary target cell.

In some embodiments, the switched cell includes: the primary target cell, or, the primary target cell and one or more candidate target cells other than the primary target cell, wherein the primary target cell and the one or more candidate target cells other than the primary target cell belong to the same simultaneous TCI update list (simultaneousTCI-UpdateList), and/or, belong to the same master cell group (MCG), and/or, belong to the same secondary cell group (SCG).

In some embodiments, first time intervals associated with candidate target cells belonging to the same simultaneous TCI update list (simultaneousTCI-UpdateList), and/or, belonging to the same master cell group (MCG), and/or, belonging to the same secondary cell group (SCG) are identical.

In some embodiments, a first time interval associated with the candidate target cell is one or more symbols, the one or more symbols is determined according to a first reference cell, the first reference cell including one of the following: the candidate target cell associated with the first time interval; a candidate target cell with a minimum subcarrier spacing in candidate target cells belonging to the same simultaneous TCI update list (simultaneousTCI-UpdateList), and/or, belonging to the same master cell group (MCG), and/or, belonging to the same secondary cell group (SCG) as the candidate target cells associated with the first time intervals; a candidate target cell with a minimum subcarrier spacing in the configured one or more candidate target cells; a serving cell with a minimum subcarrier spacing in serving cells.

In some embodiments, the indicated first TCI state is applied in the switched cells starting from a first slot after at least a first time interval is passed after the last symbol of the feedback information (HARQ-ACK), wherein the first slot is determined according to a second reference cell, the second reference cell including one of the following: the primary target cell, a cell with a minimum subcarrier spacing in the switched cells.

In some embodiments, the receiving unit 1701 is further configured to receive second configuration information, wherein the second configuration information is used to configure one third time interval for each candidate target cell in the configured one or more candidate target cells, or the second configuration information is used to configure the same third time interval for the candidate target cells belonging to the same simultaneous TCI update list (simultaneousTCI-UpdateList), and/or, belonging to the same master cell group (MCG), and/or, belonging to the same secondary cell group (SCG); or the second configuration information is used to configure one third time interval for the configured one or more candidate target cells.

In some embodiments, a first time interval with which one candidate target cell is associated is equal to the third time interval configured for the candidate target cell.

In some embodiments, in a case where the second configuration information is used to configure one third time interval for each candidate target cell in the configured one or more candidate target cells: the third time intervals configured for the candidate target cells belonging to the same simultaneous TCI update list (simultaneousTCI-UpdateList), and/or, belonging to the same master cell group (MCG), and/or, belonging to the same secondary cell group (SCG) are identical.

In some embodiments, the third time interval is one or more symbols, wherein the one or more symbols are determined according to the first reference cell.

In some embodiments, the information reception apparatus 1700 further includes: a reporting unit 1703 configured to report one second time interval for each candidate target cell in the configured one or more candidate target cells, or report the same second time interval for the candidate target cells belonging to the same simultaneous TCI update list (simultaneousTCI-UpdateList), and/or, belonging to the same master cell group (MCG), and/or, belonging to the same secondary cell group (SCG); or report one second time interval for the configured one or more candidate target cells.

In some embodiments, a first time interval with which one candidate target cell is associated is equal to the second time interval reported for the candidate target cell.

In some embodiments, in a case where one second time interval is reported for each candidate target cell in the configured one or more candidate target cells, the second time intervals reported for the candidate target cells belonging to the same simultaneous TCI update list (simultaneousTCI-UpdateList), and/or, belonging to the same master cell group (MCG), and/or, belonging to the same secondary cell group (SCG) are identical.

In some embodiments, the second time interval is one or more symbols, wherein the one or more symbols are determined according to the first reference cell.

In some embodiments, the first TCI state is applied to at least one of the following channels or signals in the primary target cell: an SSB; a PRACH; a Type 1 physical downlink control channel common search space set (Type1-PDCCH CSS set); a CORESET associated with the Type1-PDCCH CSS set; a Type 2 physical downlink control channel common search space set (Type2-PDCCH CSS set); a CORESET associated with the Type2-PDCCH CSS set; a PUSCH scheduled by a random access response (RAR) UL grant.

In some embodiments, the receiving unit 1701 is configured to receive second indication information after receiving the first indication information, wherein the second indication information indicates a second TCI state; in a case where a first cell set to which the indicated first TCI state is applied is a subset of a second cell set to which the indicated second TCI state is applied, the indicated second TCI state is applied to the second cell set, wherein the second TCI state is identical to the first TCI state.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The information reception apparatus 1700 may further include other components or modules. For detailed contents of these components or modules, relevant technologies may be referred to.

Moreover, for the sake of simplicity, FIG. 17 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

As may be known from the above embodiments, the terminal equipment is indicated to switch to a candidate target cell and apply a TCI state associated with the candidate target cell in the target cell after the time interval with which the candidate target cell is associated. Through the method herein, a situation in which the terminal equipment and a network device have ambiguity about when the TCI state may start to be applied in switched cells can be avoided, thereby achieving fast beam switching and cell switch.

### Embodiments of a sixth aspect

Embodiments of the present disclosure provide an information reception apparatus. The device may, for example, be a terminal equipment, or may be one or more parts or components configured on the terminal equipment. Moreover, the contents same as the embodiments of the second aspect are not repeated.

FIG. 18 is another schematic diagram of an information reception apparatus in embodiments of the present disclosure. As shown in FIG. 18, the information reception apparatus 1800 includes:
a second receiving unit 1801 configured to receive third indication information, wherein the third indication information indicates a fourth TCI state; and
a second transmitting unit 1802 configured to transmit feedback information (HARQ-ACK) for the third indication information, wherein after at least a fourth time interval is passed after a last symbol of the feedback information (HARQ-ACK) transmitted for the third indication information, the indicated fourth TCI state is applied in a serving cell; the second receiving unit 1801 is further configured to receive fourth indication information, wherein after at least a fifth time interval is passed after a reference symbol, the indicated fourth TCI state is applied in a switched cell, wherein the reference symbol is a last symbol of the fourth indication information, or is a last symbol of the feedback information (HARQ-ACK) transmitted by the second transmitting unit 1802 for the fourth indication information.

Thereby, by using the third indication information and the fourth indication information, the terminal equipment is capable of applying an indicated fourth TCI state in a switched cell. Thereby, a situation in which the terminal equipment and a network device have ambiguity about when the TCI state may start to be applied in switched cells can be avoided, thereby achieving fast beam switching and cell switch.

In some embodiments, the embodiments of the fifth aspect may be combined with the embodiments of the sixth aspect to execute the method shown in FIG. 12, there is no repeated description here.

For example, the reporting unit 1703 and/or the second reporting unit (not shown in FIG. 18) configured in the information reception apparatus 1800 may further report a ninth time interval and a tenth time interval; the receiving unit 1701 and/or the second receiving unit 1801 further receive(s) fourth configuration information, the fourth configuration information being used to configure an eleventh time interval, a twelfth time interval and a thirteenth time interval.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The information reception apparatus 1800 may further include other components or modules. For detailed contents of these components or modules, relevant technologies may be referred to.

Moreover, for the sake of simplicity, FIG. 18 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

As may be known from the above embodiments, by using the third indication information and the fourth indication information, the terminal equipment is capable of applying an indicated fourth TCI state in a switched cell. Thereby, a situation in which the terminal equipment and a network device have ambiguity about when the TCI state may start to be applied in switched cells can be avoided, thereby achieving fast beam switching and cell switch.

### Embodiments of a seventh aspect

Embodiments of the present disclosure provide an information transmission apparatus. The device may, for example, be a network device, or may be one or more parts or components configured on the network device. The contents same as the embodiments of the first aspect are not repeated.

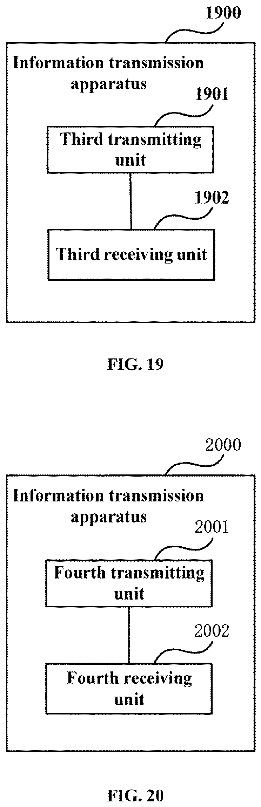

FIG. 19 is a schematic diagram of an information transmission apparatus in the embodiments of the present disclosure. As shown in FIG. 19, the information transmission apparatus 1900 includes:
a third transmitting unit 1901 configured to transmit first indication information, wherein the first indication information indicates a first TCI state and cell switch; and
a third receiving unit 1902 configured to receive the feedback information (HARQ-ACK); wherein the indicated first TCI state is applied in a switched cell after at least a first time interval is passed after a last symbol of the feedback information (HARQ-ACK).

The terminal equipment is indicated to switch to a candidate target cell and apply a TCI state associated with the candidate target cell in the target cell after the time interval with which the candidate target cell is associated. Through the method herein, a situation in which the terminal equipment and a network device have ambiguity about when the TCI state may start to be applied in switched cells can be avoided, thereby achieving fast beam switching and cell switch.

In some embodiments, the third transmitting unit 1901 is further configured to transmit first configuration information, wherein the first configuration information is used to configure one or more candidate target cells.

Second configuration information is transmitted, wherein the third transmitting unit 1901 is further configured to transmit the second configuration information, the second configuration information is used to configure one third time interval for each candidate target cell in one or more candidate target cells configured by the first configuration information, the first time interval associated with one candidate target cell is equal to the configured third time interval; or, the second configuration information is used to configure the same third time interval for the candidate target cells belonging to the same simultaneous TCI update list (simultaneousTCI-UpdateList), and/or, belonging to the same master cell group (MCG), and/or, belonging to the same secondary cell group (SCG); or, the second configuration information is used to configure one third time interval for the configured one or more candidate target cells.

In some embodiments, the third transmitting unit 1901 is further configured to transmit third configuration information, wherein the third configuration information is used to configure an inter-cell beam management mode or a cell switch mode.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The information transmission apparatus 1900 may further include other components or modules. For detailed contents of these components or modules, relevant technologies may be referred to.

Moreover, for the sake of simplicity, FIG. 19 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

As may be known from the above embodiments, the terminal equipment is indicated to switch to a candidate target cell and apply a TCI state associated with the candidate target cell in the target cell after the time interval with which the candidate target cell is associated. Through the method herein, a situation in which the terminal equipment and a network device have ambiguity about when the TCI state may start to be applied in switched cells can be avoided, thereby achieving fast beam switching and cell switch.

### Embodiments of an eighth aspect

Embodiments of the present disclosure provide an information transmission apparatus. The device may, for example, be a network device, or may be one or more parts or components configured on the network device. The contents same as the embodiments of the second aspect are not repeated.

FIG. 20 is another schematic diagram of an information transmission apparatus in the embodiments of the present disclosure; As shown in FIG. 20, the information transmission apparatus 2000 comprises:
a fourth transmitting unit 2001 configured to transmit third indication information, wherein the third indication information indicates a fourth TCI state;
a fourth receiving unit 2002 configured to receive feedback information (HARQ-ACK) for the third indication information, wherein after at least a fourth time interval is passed after a last symbol of the feedback information (HARQ-ACK) for the third indication information, the terminal equipment applies the indicated fourth TCI state in a serving cell;
the fourth transmitting unit 2001 is further configured to transmit fourth indication information, wherein the fourth indication information indicates cell switch;
wherein after at least a fifth time interval is passed after a reference symbol, the terminal equipment applies the indicated fourth TCI state in a switched cell, wherein the reference symbol is a last symbol of the fourth indication information, or is a last symbol of the feedback information (HARQ-ACK) for the fourth indication information.

Thereby, by using the third indication information and the fourth indication information, the terminal equipment is capable of applying an indicated fourth TCI state in a switched cell. Thereby, a situation in which the terminal equipment and a network device have ambiguity about when the TCI state may start to be applied in switched cells can be avoided, thereby achieving fast beam switching and cell switch.

In some embodiments, the embodiments of the seventh aspect may be combined with the embodiments of the eighth aspect to execute the method shown in FIG. 16, there is no repeated description here.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The information transmission apparatus 2000 may further include other components or modules. For detailed contents of these components or modules, relevant technologies may be referred to.

Moreover, for the sake of simplicity, FIG. 20 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

As may be known from the above embodiments, by using the third indication information and the fourth indication information, the terminal equipment is capable of applying an indicated fourth TCI state in a switched cell. Thereby, a situation in which the terminal equipment and a network device have ambiguity about when the TCI state may start to be applied in switched cells can be avoided, thereby achieving fast beam switching and cell switch.

### Embodiments of a ninth aspect

Embodiments of the present disclosure further provide a communication system, FIG.1 may be referred to, the contents same as the embodiments of the first to eighth aspects are not repeated.

In some embodiments, the communication system 100 at least may include: a network device and a terminal equipment, wherein
the network device is configured to transmit first indication information, wherein the first indication information indicates a first TCI state and cell switch; and receive feedback information (HARQ-ACK);
the terminal equipment is configured to receive the first indication information; and transmit the feedback information (HARQ-ACK), wherein after at least a first time interval is passed after a last symbol of the feedback information (HARQ-ACK), indicated first TCI state is applied in a switched cell.

In some embodiments, the communication system 100 at least may further include: a network device and a terminal equipment, wherein
the network device is configured to transmit third indication information, wherein the third indication information is used to indicate a fourth TCI state; and receive feedback information (HARQ-ACK) for the third indication information, wherein after at least a fourth time interval is passed after a last symbol of the feedback information (HARQ-ACK) for the third indication information, the terminal equipment applies the indicated fourth TCI state in a serving cell; and
the network device is further configured to transmit fourth indication information, wherein the fourth indication information is used to indicate cell switch; wherein after at least a fifth time interval is passed after a reference symbol, the terminal equipment applies the indicated fourth TCI state in a switched cell, wherein the reference symbol is a last symbol of the fourth indication information, or is a last symbol of the feedback information (HARQ-ACK) for the fourth indication information.

In some embodiments, the communication system 100 at least may further include: a network device and a terminal equipment, wherein
the network device is configured to transmit fifth indication information, wherein the fifth indication information is used to indicate a fifth TCI state and cell switch; and receive feedback information (HARQ-ACK) for the fifth indication information, wherein after at least a sixth time interval is passed after a last symbol of the feedback information (HARQ-ACK) transmitted for the fifth indication information, the terminal equipment applies the indicated fifth TCI state in a switched cell;
the network device is further configured to transmit sixth indication information, wherein the sixth indication information is used to indicate a sixth TCI state;
receive feedback information (HARQ-ACK) for the sixth indication information, wherein after at least a seventh time interval is passed after a last symbol of the feedback information (HARQ-ACK) transmitted for the sixth indication information, the terminal equipment applies the indicated sixth TCI state in a serving cell;
the network device is further configured to transmit seventh indication information, wherein the seventh indication information is used to indicate cell switch;
wherein after at least an eighth time interval is passed after a reference symbol, the terminal equipment applies the indicated sixth TCI state in a switched cell, wherein the reference symbol is a last symbol of the seventh indication information, or is a last symbol of the feedback information (HARQ-ACK) for the seventh indication information.

Embodiments of the present disclosure further provide a network device, for example may be a base station, but the present disclosure is not limited to this, it may also be other network device.

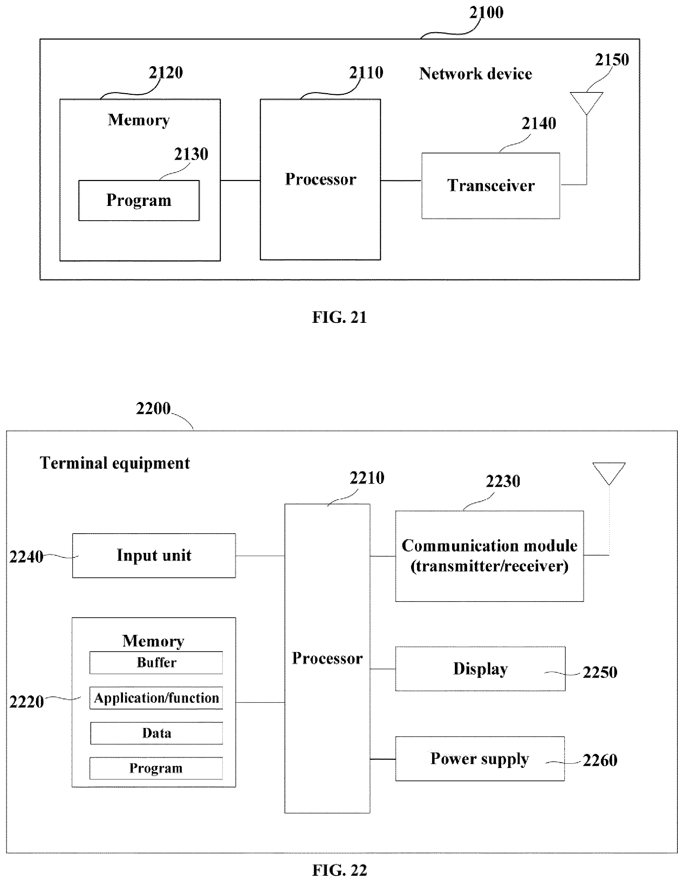

FIG. 21 is a composition schematic diagram of a network device in the embodiments of the present disclosure. As shown in FIG. 21, the network device 2100 may include: a processor 2110 (such as a central processing unit (CPU)) and a memory 2120; the memory 2120 is coupled to the processor 2110. The memory 2120 may store various data; moreover, also stores a program 2930 for information processing, and executes the program 2130 under the control of the processor 2110.

In addition, as shown in FIG. 21, the network device 2100 may further include: a transceiver 2140 and an antenna 2150, etc.; wherein the functions of said components are similar to relevant arts, which are not repeated here. It's worth noting that the network device 2100 does not have to include all the components shown in FIG. 21. Moreover, the network device 2100 may further include components not shown in FIG. 21, relevant arts may be referred to.

Embodiments of the present disclosure further provide a terminal equipment, but the present disclosure is not limited to this, it may also be other device.

FIG. 22 is a schematic diagram of a terminal equipment in the embodiments of the present disclosure. As shown in FIG. 22, the terminal equipment 2200 may include a processor 2210 and a memory 2220; the memory 2220 stores data and programs, and is coupled to the processor 2210. It's worth noting that this figure is exemplary; other types of structures can also be used to supplement or replace this structure, so as to realize a telecommunication function or other functions.

For example, the processor 2210 may be configured to execute a program to implement the information reception method as described in the embodiments of the first aspect or the embodiments of the second aspect. For example, the processor 2210 may be configured to perform the following control: receiving first indication information, wherein the first indication information indicates a first TCI state and cell switch; and transmits feedback information (HARQ-ACK); after at least a first time interval is passed after a last symbol of the feedback information (HARQ-ACK), indicated first TCI state is applied in a switched cell.

As shown in FIG. 22, the terminal equipment 2200 may further include: a communication module 2230, an input unit 2240, a display 2250 and a power supply 2260. The functions of said components are similar to relevant arts, which are not repeated here. It's worth noting that the terminal equipment 2200 does not have to include all the components shown in FIG. 22, said components are not indispensable. Moreover, the terminal equipment 2200 may further include components not shown in FIG. 22, relevant arts may be referred to.

Embodiments of the present disclosure further provide a computer program, wherein when a terminal equipment executes the program, the program enables the terminal equipment to execute the information reception method described in the embodiments of the first to second aspects.

Embodiments of the present disclosure further provide a storage medium in which a computer program is stored, wherein the computer program enables a terminal equipment to execute the information reception method described in the embodiments of the first to second aspects.

Embodiments of the present disclosure further provide a computer program, wherein when a terminal equipment executes the program, the program enables the terminal equipment to execute the information transmission method described in the embodiments of the third to fourth aspects.

Embodiments of the present disclosure further provide a storage medium in which a computer program is stored, wherein the computer program enables a terminal equipment to execute the information transmission method described in the embodiments of the third to fourth aspects.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

As for the implementations including the above embodiments, the following supplements are further disclosed:
1. An information reception method, applicable to a terminal equipment, wherein the method includes:
   receiving first indication information, wherein the first indication information is used to indicate a first TCI state and cell switch;
   transmitting feedback information (HARQ-ACK); and
   after at least a first time interval is passed after a last symbol of the feedback information (HARQ-ACK), applying indicated first TCI state in a switched cell.
2. The method according to Supplement 1, wherein the method further includes:
   receiving first configuration information, wherein the first configuration information is used to configure one or more candidate target cells.
3. The method according to Supplement 2, wherein the first indication information is used to indicate one candidate target cell as a primary target cell in the configured one or more candidate target cells.
4. The method according to Supplement 3, wherein each candidate target cell in the configured one or more candidate target cells is associated with one first time interval, and at least a first time interval being passed includes a first time interval with which the primary target cell is associated being passed.
5. The method according to Supplement 3, wherein the indicated first TCI state is associated with a cell, the cell being the primary target cell or a cell other than the primary target cell.
6. The method according to Supplement 3, wherein the switched cell comprises:
   the primary target cell; or,
   the primary target cell and one or more candidate target cells other than the primary target cell, wherein the primary target cell and the one or more candidate target cells other than the primary target cell belong to the same simultaneous TCI update list (simultaneousTCI-UpdateList), and/or, belong to the same master cell group (MCG), and/or, belong to the same secondary cell group (SCG).
7. The method according to Supplement 4, wherein the first time intervals associated with candidate target cells belonging to the same simultaneous TCI update list (simultaneousTCI-UpdateList), and/or, belonging to the same master cell group (MCG), and/or, belonging to the same secondary cell group (SCG) are identical.
8. The method according to Supplement 4, wherein the first time interval associated with the candidate target cell is one or more symbols, wherein the one or more symbols is/are determined according to a first reference cell, the first reference cell comprising one of the following:
   the candidate target cell associated with the first time interval;
   a candidate target cell with a minimum subcarrier spacing in candidate target cells belonging to the same simultaneous TCI update list (simultaneousTCI-UpdateList), and/or, belonging to the same master cell group (MCG), and/or, belonging to the same secondary cell group (SCG) as the candidate target cells associated with the first time intervals;
   a candidate target cell with a minimum subcarrier spacing in the configured one or more candidate target cells; or
   a serving cell with a minimum subcarrier spacing in serving cells.
9. The method according to Supplement 6, wherein the indicated first TCI state is applied in the switched cells starting from a first slot after at least a first time interval (Z) is passed after the last symbol of the feedback information (HARQ-ACK),
   wherein the first slot is determined according to a second reference cell, the second reference cell comprising one of the following:
   the primary target cell;
   a cell with a minimum subcarrier spacing in the switched cells.
10. The method according to Supplement 8, wherein the method further includes:
   receiving second configuration information, wherein
   the second configuration information is used to configure one third time interval for each candidate target cell in the configured one or more candidate target cells, or
   the second configuration information is used to configure the same third time interval for the candidate target cells belonging to the same simultaneous TCI update list (simultaneousTCI-UpdateList), and/or, belonging to the same master cell group (MCG), and/or, belonging to the same secondary cell group (SCG), or
   the second configuration information is used to configure one third time interval for the configured one or more candidate target cells.
11. The method according to Supplement 10, wherein a first time interval with which one candidate target cell is associated is equal to the third time interval configured for the candidate target cell.
12. The method according to Supplement 10, wherein in a case where the second configuration information is used to configure one third time interval for each candidate target cell in the configured one or more candidate target cells,
   the third time intervals configured for the candidate target cells belonging to the same simultaneous TCI update list (simultaneousTCI-UpdateList), and/or, belonging to the same master cell group (MCG), and/or, belonging to the same secondary cell group (SCG) are identical.
13. The method according to any one of Supplements 10-12, wherein the third time interval is one or more symbols, wherein the one or more symbols are determined according to the first reference cell.
14. The method according to Supplement 8, wherein the method further includes:
   reporting one second time interval for each candidate target cell in the configured one or more candidate target cells, or
   reporting the same second time interval for the candidate target cells belonging to the same simultaneous TCI update list (simultaneousTCI-UpdateList), and/or, belonging to the same master cell group (MCG), and/or, belonging to the same secondary cell group (SCG), or
   reporting one second time interval for the configured one or more candidate target cells.
15. The method according to Supplement 14, wherein a first time interval with which one candidate target cell is associated is equal to the second time interval reported for the candidate target cell.
16. The method according to Supplement 14, wherein in a case where one second time interval is reported for each candidate target cell in the configured one or more candidate target cells, the second time intervals reported for the candidate target cells belonging to the same simultaneous TCI update list (simultaneousTCI-UpdateList), and/or, belonging to the same master cell group (MCG), and/or, belonging to the same secondary cell group (SCG) are identical.
17. The method according to any one of Supplements 14-16, wherein the second time interval is one or more symbols, wherein the one or more symbols are determined according to the first reference cell.
18. The method according to Supplement 3, wherein the method further includes:
   the first TCI state is applied to at least one of the following channels or signals of the primary target cell:
   an SSB;
   a PRACH;
   a type 1 physical downlink control channel common search space set (Type1-PDCCH CSS set);
   a CORESET associated with the Type1-PDCCH CSS set;
   a type 2 physical downlink control channel common search space set (Type2-PDCCH CSS set);
   a CORESET associated with the Type2-PDCCH CSS set; or
   a PUSCH scheduled by a random access response (RAR) UL grant.
19. The method according to Supplement 1, wherein the method further includes:
   receiving second indication information after receiving the first indication information, wherein the second indication information is used to indicate a second TCI state; and
   in a case where a first cell set to which the indicated first TCI state is applied is a subset of a second cell set to which the indicated second TCI state is applied, applying the indicated second TCI state to the second cell set.
20. The method according to Supplement 19, wherein the second TCI state is the same as the first TCI state.
21. The method according to Supplement 3, wherein each candidate target cell in the configured one or more candidate target cells is associated with one first time interval, at least a first time interval being passed includes a maximum time interval in the first time interval being passed, with which the primary target cell and the candidate target cells belonging to the same simultaneous TCI update list (simultaneousTCI-UpdateList), and/or, belonging to the same master cell group (MCG), and/or, belonging to the same secondary cell group (SCG) are associated.
22. The method according to any one of Supplements 1 to 21, wherein the method further includes:
   receiving third configuration information, wherein the third configuration information is used to configure an inter-cell beam management mode or a cell switch mode.
23. The method according to any one of Supplements 1 to 22, wherein the first indication information is first DCI and/or a first MAC CE.
24. The method according to Supplement 23, wherein
   the first indication information is first DCI, the first DCI is DCI without downlink assignment, the CRC of the first DCI is scrambled using a CS-RNTI, or the first DCI is DCI with downlink assignment, the CRC of the first DCI is scrambled using a C-RNTI.
25. The method according to Supplement 23, wherein
   the first indication information is first DCI and a first MAC CE, wherein the first DCI is DCI with downlink assignment, the CRC of the first DCI is scrambled using a C-RNTI, the first DCI indicates the first TCI state, and the first MAC CE indicates cell switch.
26. The method according to any one of Supplements 1 to 25, wherein the first indication information is further used to indicate a CS-RNTI, wherein the CS-RNTI is used to scramble a CRC of the second DCI for updating a TCI state.
27. The method according to any one of Supplements 1 to 26, wherein the indicated first TCI state is different from the indicated third TCI state before the terminal equipment is indicated with the first TCI state.
28. An information reception method, applicable to a terminal equipment, wherein the method includes:
   receiving third indication information, wherein the third indication information is used to indicate a fourth TCI state;
   after at least a fourth time interval is passed after a last symbol of the feedback information (HARQ-ACK) transmitted for the third indication information, applying the indicated fourth TCI state in a serving cell;
   receiving fourth indication information, wherein the fourth indication information is used to indicate cell switch; and
   after at least a fifth time interval is passed after a reference symbol, applying the indicated fourth TCI state in a switched cell, wherein the reference symbol is a last symbol of the fourth indication information, or is a last symbol of the feedback information (HARQ-ACK) transmitted for the fourth indication information.
29. An information reception method, applicable to a terminal equipment, wherein the method includes:
   receiving fifth indication information, wherein the fifth indication information is used to indicate a fifth TCI state and cell switch;
   after at least a sixth time interval is passed after a last symbol of the feedback information (HARQ-ACK) for the fifth indication information, applying the indicated fifth TCI state in a switched cell;
   receiving sixth indication information, wherein the sixth indication information is used to indicate a sixth TCI state;
   after at least a seventh time interval is passed after a last symbol of the feedback information (HARQ-ACK) for the sixth indication information, applying the indicated sixth TCI state in a serving cell;
   receiving seventh indication information, wherein the seventh indication information is used to indicate cell switch; and
   after at least an eighth time interval is passed after a reference symbol, applying the indicated sixth TCI state in a switched cell, wherein the reference symbol is a last symbol of the seventh indication information, or is a last symbol of the feedback information (HARQ-ACK) for the seventh indication information.
30. The method according to Supplement 29, wherein the method further includes:
   reporting a ninth time interval and a tenth time interval;
   receiving fourth configuration information, the fourth configuration information being used to configure an eleventh time interval, a twelfth time interval and a thirteenth time interval.
31. An information transmission method, applicable to a network device, wherein the method includes:
   transmitting first indication information, wherein the first indication information is used to indicate a first TCI state and cell switch; and
   receiving feedback information (HARQ-ACK);
   wherein the indicated first TCI state is applied in a switched cell after at least a first time interval is passed after a last symbol of the feedback information (HARQ-ACK).
32. The method according to Supplement 31, wherein the method further includes:
   transmitting first configuration information, wherein the first configuration information is used to configure one or more candidate target cells.
33. The method according to Supplement 31, wherein the method further includes:
   transmitting second configuration information, wherein
   the second configuration information is used to configure one third time interval for each candidate target cell in the one or more candidate target cells configured by the first configuration information, the first time interval associated with one candidate target cell is equal to the configured third time interval; or
   the second configuration information is used to configure the same third time interval for the candidate target cells belonging to the same simultaneous TCI update list (simultaneousTCI-UpdateList), and/or, belonging to the same master cell group (MCG), and/or, belonging to the same secondary cell group (SCG), or
   the second configuration information is used to configure one third time interval for the configured one or more candidate target cells.
34. The method according to Supplement 31, wherein the method further includes:
   transmitting third configuration information, wherein the third configuration information is used to configure an inter-cell beam management mode or a cell switch mode.
35. An information transmission method, applicable to a network device, wherein the method includes:
   transmitting third indication information, wherein the third indication information is used to indicate a fourth TCI state;
   receiving feedback information (HARQ-ACK) for the third indication information, wherein after at least a fourth time interval is passed after a last symbol of the feedback information (HARQ-ACK) for the third indication information, a terminal equipment applies the indicated fourth TCI state in a serving cell; and
   transmitting fourth indication information, wherein the fourth indication information is used to indicate cell switch;
   wherein after at least a fifth time interval is passed after a reference symbol, the terminal equipment applies the indicated fourth TCI state in a switched cell, wherein the reference symbol is a last symbol of the fourth indication information, or is a last symbol of the feedback information (HARQ-ACK) for the fourth indication information.
36. An information transmission method, applicable to a network device, wherein the method includes:
   transmitting fifth indication information, wherein the fifth indication information is used to indicate a fifth TCI state and cell switch;
   receiving feedback information (HARQ-ACK) for the fifth indication information, wherein after at least a sixth time interval is passed after a last symbol of the feedback information (HARQ-ACK) transmitted for the fifth indication information, a terminal equipment applies the indicated fifth TCI state in a switched cell;
   transmitting sixth indication information, wherein the sixth indication information is used to indicate a sixth TCI state;
   receiving feedback information (HARQ-ACK) for the sixth indication information, wherein after at least a seventh time interval is passed after a last symbol of the feedback information (HARQ-ACK) transmitted for the sixth indication information, the terminal equipment applies the indicated sixth TCI state in a serving cell;
   transmitting seventh indication information, wherein the seventh indication information is used to indicate cell switch; and
   wherein after at least an eighth time interval is passed after a reference symbol, the terminal equipment applies the indicated sixth TCI state in a switched cell, wherein the reference symbol is a last symbol of the seventh indication information, or is a last symbol of the feedback information (HARQ-ACK) for the seventh indication information.
37. A terminal equipment, comprising a memory and a processor, the memory storing a computer program, and the processor being configured to execute the computer program to implement the information reception method according to any one of Supplements 1 to 30.
38. A network device, comprising a memory and a processor, the memory storing a computer program, and the processor being configured to execute the computer program to implement the information transmission method according to any one of Supplements 31 to 36.
39. A communication system, comprising a network device and a terminal equipment, wherein
   the network device is configured to transmit first indication information, wherein the first indication information is used to indicate a first TCI state and cell switch; and receive feedback information (HARQ-ACK);
   the terminal equipment is configured to receive the first indication information; and transmit the feedback information (HARQ-ACK), wherein after at least a first time interval is passed after a last symbol of the feedback information (HARQ-ACK), indicated first TCI state is applied in a switched cell.
40. A communication system, comprising a network device and a terminal equipment, wherein
   the network device is configured to transmit third indication information, wherein the third indication information is used to indicate a fourth TCI state; and receive feedback information (HARQ-ACK) for the third indication information, wherein after at least a fourth time interval is passed after a last symbol of the feedback information (HARQ-ACK) for the third indication information, the terminal equipment applies the indicated fourth TCI state in a serving cell; and
   the network device is further configured to transmit fourth indication information, wherein the fourth indication information is used to indicate cell switch; wherein after at least a fifth time interval is passed after a reference symbol, the terminal equipment applies the indicated fourth TCI state in a switched cell, wherein the reference symbol is a last symbol of the fourth indication information, or is a last symbol of the feedback information (HARQ-ACK) for the fourth indication information.
41. A communication system, comprising a network device and a terminal equipment, wherein
   the network device is configured to transmit fifth indication information, wherein the fifth indication information is used to indicate a fifth TCI state and cell switch; and receive feedback information (HARQ-ACK) for the fifth indication information, wherein after at least a sixth time interval is passed after a last symbol of the feedback information (HARQ-ACK) transmitted for the fifth indication information, the terminal equipment applies the indicated fifth TCI state in a switched cell;
   the network device is further configured to transmit sixth indication information, wherein the sixth indication information is used to indicate a sixth TCI state;
   receive feedback information (HARQ-ACK) for the sixth indication information, wherein after at least a seventh time interval is passed after a last symbol of the feedback information (HARQ-ACK) transmitted for the sixth indication information, the terminal equipment applies the indicated sixth TCI state in a serving cell;
   the network device is further configured to transmit seventh indication information, wherein the seventh indication information is used to indicate cell switch;
   wherein after at least an eighth time interval is passed after a reference symbol, the terminal equipment applies the indicated sixth TCI state in a switched cell, wherein the reference symbol is a last symbol of the seventh indication information, or is a last symbol of the feedback information (HARQ-ACK) for the seventh indication information.

## Claims

1. An information reception apparatus, configured in a terminal equipment, the information reception apparatus comprising:
a receiving unit configured to receive first indication information, wherein the first indication information is used to indicate a first transmission configuration indication (TCI) state and cell switch; and
a transmitting unit configured to transmit feedback information (HARQ-ACK);
wherein after at least a first time interval is passed after a last symbol of the feedback information (HARQ-ACK), indicated first transmission configuration indication (TCI) state is applied in a switched cell.

2. The apparatus according to claim 1, wherein
the receiving unit is further configured to receive first configuration information, wherein the first configuration information is used to configure one or more candidate target cells.

3. The apparatus according to claim 2, wherein the first indication information is used to indicate one candidate target cell as a primary target cell in the configured one or more candidate target cells.

4. The apparatus according to claim 3, wherein each candidate target cell in the configured one or more candidate target cells is associated with one first time interval, and at least a first time interval being passed comprises a first time interval with which the primary target cell is associated being passed.

5. The apparatus according to claim 3, wherein the indicated first transmission configuration indication (TCI) state is associated with a cell, the cell being the primary target cell or a cell other than the primary target cell.

6. The apparatus according to claim 3, wherein the switched cells comprise:
the primary target cell; or,
the primary target cell and one or more candidate target cells other than the primary target cell, wherein the primary target cell and the one or more candidate target cells other than the primary target cell belong to the same simultaneous TCI update list (simultaneousTCI-UpdateList), and/or, belong to the same master cell group (MCG), and/or, belong to the same secondary cell group (SCG).

7. The apparatus according to claim 4, wherein the first time intervals associated with candidate target cells belonging to the same simultaneous TCI update list (simultaneousTCI-UpdateList), and/or, belonging to the same master cell group (MCG), and/or, belonging to the same secondary cell group (SCG) are identical.

8. The apparatus according to claim 4, wherein the first time interval associated with the candidate target cell is one or more symbols, the one or more symbols being determined according to a first reference cell, the first reference cell comprising one of the followings:
the candidate target cell associated with the first time interval;
a candidate target cell with a minimum subcarrier spacing in candidate target cells belonging to the same simultaneous TCI update list (simultaneousTCI-UpdateList), and/or, belonging to the same master cell group (MCG), and/or, belonging to the same secondary cell group (SCG) as the candidate target cells associated with the first time intervals;
a candidate target cell with a minimum subcarrier spacing in the configured one or more candidate target cells; or
a serving cell with a minimum subcarrier spacing in serving cells.

9. The apparatus according to claim 6, wherein the indicated first transmission configuration indication (TCI) state is applied in the switched cells starting from a first slot after at least a first time interval is passed after the last symbol of the feedback information (HARQ-ACK),
wherein the first slot is determined according to a second reference cell, the second reference cell comprising one of the followings:
the primary target cell;
a cell with a minimum subcarrier spacing in the switched cells.

10. The apparatus according to claim 8, wherein
the receiving unit is further configured to receive second configuration information, wherein the second configuration information is used to configure one third time interval for each candidate target cell in the configured one or more candidate target cells, or
the second configuration information is used to configure the same third time interval for the candidate target cells belonging to the same simultaneous TCI update list (simultaneousTCI-UpdateList), and/or, belonging to the same master cell group (MCG), and/or, belonging to the same secondary cell group (SCG), or
the second configuration information is used to configure one third time interval for the configured one or more candidate target cells.

11. The apparatus according to claim 10, wherein a first time interval with which one candidate target cell is associated is equal to the third time interval configured for the candidate target cell.

12. The apparatus according to claim 10, wherein in a case where the second configuration information is used to configure one third time interval for each candidate target cell in the configured one or more candidate target cells,
the third time intervals configured for the candidate target cells belonging to the same simultaneous TCI update list (simultaneousTCI-UpdateList), and/or, belonging to the same master cell group (MCG), and/or, belonging to the same secondary cell group (SCG) are identical.

13. The apparatus according to any one of claims 10-12, wherein the third time interval is one or more symbols, wherein the one or more symbols are determined according to the first reference cell.

14. The apparatus according to claim 8, wherein the apparatus further comprises:
a reporting unit configured to report one second time interval for each candidate target cell in the configured one or more candidate target cells, or
report the same second time interval for the candidate target cells belonging to the same simultaneous TCI update list (simultaneousTCI-UpdateList), and/or, belonging to the same master cell group (MCG), and/or, belonging to the same secondary cell group (SCG), or
report one second time interval for the configured one or more candidate target cells.

15. The apparatus according to claim 14, wherein a first time interval with which one candidate target cell is associated is equal to the second time interval reported for the candidate target cell.

16. The apparatus according to claim 14, wherein in a case where one second time interval is reported for each candidate target cell in the configured one or more candidate target cells, the second time intervals reported for the candidate target cells belonging to the same simultaneous TCI update list (simultaneousTCI-UpdateList), and/or, belonging to the same master cell group (MCG), and/or, belonging to the same secondary cell group (SCG) are identical.

17. The apparatus according to any one of claims 14-16, wherein the second time interval is one or more symbols, wherein the one or more symbols are determined according to the first reference cell.

18. The apparatus according to claim 3, wherein
the first transmission configuration indication(TCI) state is applied to at least one of the following channels or signals of the primary target cell:
a synchronization signal and PBCH block (SSB);
a physical random access channel (PRACH);
a type 1 physical downlink control channel common search space set (Type1-PDCCH CSS set);
a control resource set (CORESET) associated with the type 1 physical downlink control channel common search space set (Type1-PDCCH CSS set);
a type 2 physical downlink control channel common search space set (Type2-PDCCH CSS set);
a control resource set (CORESET) associated with the type 2 physical downlink control channel common search space set (Type2-PDCCH CSS set); or,
a physical uplink shared channel (PUSCH) scheduled by a random access response UL grant.

19. The apparatus according to claim 1, wherein the receiving unit is configured to receive the second indication information after receiving the first indication information, wherein the second indication information is used to indicate a second transmission configuration indication (TCI) state; and
in a case where a first cell set to which the indicated first transmission configuration indication (TCI) state is applied is a subset of a second cell set to which the indicated second transmission configuration indication (TCI) state is applied, the indicated second transmission configuration indication (TCI) state is applied to the second cell set, wherein the second transmission configuration indication (TCI) state is identical to the first transmission configuration indication (TCI) state.

20. An information reception apparatus, configured in a terminal equipment, the information reception apparatus comprising:
a second receiving unit configured to receive third indication information, wherein the third indication information is used to indicate a fourth transmission configuration indication (TCI) state; and
a second transmitting unit configured to transmit feedback information (HARQ-ACK) for the third indication information, wherein after at least a fourth time interval is passed after a last symbol of the feedback information (HARQ-ACK) transmitted for the third indication information, the indicated fourth transmission configuration indication (TCI) state is applied in a serving cell;
the second receiving unit is further configured to receive fourth indication information, wherein the fourth indication information is used to indicate cell switch; and
after at least a fifth time interval is passed after a reference symbol, the indicated fourth transmission configuration indication (TCI) state is applied in a switched cell, wherein the reference symbol is a last symbol of the fourth indication information, or is a last symbol of the feedback information (HARQ-ACK) transmitted by the second transmitting unit for the fourth indication information.
